# EUROPEAN PATENT SPECIFICATION

(11) **EP 2 849 051 B1**
(45) Date of publication and mention of the grant of the patent: **18.12.2019**
(21) Application number: 14185085.9
(22) Date of filing: 17.09.2014
(51) Int. Cl.: G06F 3/12

(54) **Communication terminal, information processing method, and carrier means**
Kommunikationsendgerät, Informationsverarbeitungsverfahren und Trägeranordnung
Terminal de communication, procédé de traitement d'informations et moyens de support

(30) Priority: 17.09.2013 JP 2013191833; 16.09.2014 JP 2014187338
(43) Date of publication of application: 18.03.2015
(73) Proprietor: Ricoh Company, Ltd., Tokyo 143-8555 (JP)
(72) Inventor: Arai, Masaki, Ohta-ku, Tokyo 143-8555 (JP)
(74) Representative: Watkin, Timothy Lawrence Harvey

(56) References cited:
- EP-A2- 1 271 297
- EP-A2- 2 423 804

## Description

### BACKGROUND

### Technical Field

The present invention relates to a communication terminal, which is used to execute a designated or target process to a plurality of apparatuses, an information processing system employing the communication terminal, an information processing method, and a carrier medium storing program of the information processing method.

### Background Art

With wide use of communication terminals such as smartphones and advancement of the network technology, a communication terminal, an information processing apparatus that manages data, and a printer that can print data may cooperate with one another to perform a process of outputting the data managed by the information processing apparatus using the printer in response to an instruction from the communication terminal.

The information processing apparatus and the printer can be connected via a local area network (LAN) and/or wide area network (WAN) such as the Internet, and the information processing apparatus and the printer can be connected to communication terminals via LAN and/or WAN such as 3G line/LTE (Long Term Evolution).

When all of the communication terminal, information processing apparatus, and printer are connected to the same network, which means when all of the communication terminal, information processing apparatus, and printer exist on the same network environment, the devices on the network can easily perform the above described outputting process. For example, as disclosed in JP-2005-141620-A, physical installation condition of devices available for use on a network and having set with corresponding device identification information can be reported to a user so that the user can select a target device from the plurality of devices easily and effectively. In this configuration, the user can select the target device without considering network configuration and can conduct a target process such as the outputting process described above.

However, if the communication terminal, the information processing apparatus, and the printer exist on different network environments, the above described outputting process is not easily performed because a user needs to check and reconfigure settings depending on network environment of each apparatus.

EP 2423804A discloses a communication terminal comprising a receiving unit to receive an input of an execution instruction that instructs to execute an outputting process for outputting electronic data stored in an information processing apparatus by using an output apparatus; an obtaining unit to obtain connection status of each of the communication terminal, the information processing apparatus, and the output apparatus in response to receiving the input of the execution instruction; a determination unit to determine a transmission destination of an execution request to be performed to execute the outputting process instructed by the execution instruction, depending on the connection status of each of the communication terminal, the information processing apparatus, and the output apparatus that are obtained by the obtaining unit; and a generating unit to generate the execution request based on the transmission destination determined by the determination unit, wherein when the transmission destination determined by the determination unit is the information processing apparatus, the execution request includes a first execution request including information that identifies the electronic data, and information that identifies the output apparatus, when the transmission destination determined by the determination unit is the output apparatus, the execution request includes a second execution request including information that identifies the electronic data, and information that identifies the information processing apparatus, when the transmission destination determined by the determination unit is the information processing apparatus and the output apparatus, the execution request includes a third execution request including an obtaining request for obtaining the electronic data to be transmitted to the information processing apparatus, and a fourth execution request including an output request for outputting the electronic data to be transmitted to the output apparatus; and a transmission unit to transmit at least one of the first, the second, the third, and the fourth execution requests, generated by the generating unit, to the transmission destination determined by the determination unit.

The invention is in the terminal of Claim 1 and the method of Claim 13.

As to the above described aspects of the present invention, even if a plurality of apparatuses exist on different network environments, an output destination of request can be switched automatically and effectively, and a designated or target process can be conducted effectively, with which a user can use a target function easily and effectively.

### BRIEF DESCRIPTION OF THE DRAWINGS

A more complete appreciation of the disclosure and many of the attendant advantages and features thereof can be readily obtained and understood from the following detailed description with reference to the accompanying drawings, wherein:
FIG. 1 is a schematic configuration of an information processing system according to an example embodiment;
FIG. 2 is a hardware configuration of a communication terminal used for an information processing system;
FIG. 3 is a functional block diagram of a communication terminal used for an information processing system;
FIG. 4 is a functional block diagram of an information processing apparatus, and a MFP included in the information processing system as a plurality of apparatuses;
FIG. 5 is an example code displayed on a screen of MFP when pairing is conducted with a MFP;
FIG. 6 is an example of contents of the code of FIG. 5;
FIG. 7 is an example screen displayed on a communication terminal when capturing a code;
FIG. 8 is an example screen displayed on a communication terminal when pairing is successfully completed;
FIG. 9 is a sequential chart of process when a communication terminal and a MFP are not registered in advance;
FIG. 10A and 10B are a flowchart showing the steps of process conducted by an information processing system;
FIG. 11 is a scheme of process of outputting information when a communication terminal, an information processing apparatus, and a MFP are connected to the same network;
FIG. 12 is a scheme of process of outputting information when a communication terminal and a MFP are connected to the same network, and an information processing apparatus is connected to other network;
FIG. 13 is a scheme of process of outputting information when an information processing apparatus and a MFP are connected to the same network, and a communication terminal is connected to other network;
FIG. 14 is a scheme of process of outputting information when all of a communication terminal, an information processing apparatus, and a MFP are connected to different networks;
FIG. 15 is a scheme of other example process of outputting information when all of a communication terminal, an information processing apparatus, and a MFP are connected to different networks;
FIG. 16 is a scheme of other example process of outputting information when a communication terminal and a MFP are connected to the same network, and an information processing apparatus is connected to other network;
FIG. 17 is a flowchart showing the steps of other example process when a communication terminal and a MFP cannot communicate directly;
FIG. 18 is a scheme of process of outputting information when a communication terminal and an information processing apparatus are connected to the same network, and a MFP is connected to other network; and
FIG. 19 is a flow chart showing the steps of other example process when an information processing apparatus and a MFP do not exist in the same network;
FIG. 20A and 20B are a flow chart showing the steps of process of an information processing system used for other connection pattern;
FIG. 21 is a scheme of process of outputting information when a communication terminal, an information processing apparatus and a MFP are connected to the same network;
FIG. 22 is a scheme of process of outputting information using a relay server when a communication terminal and an information processing apparatus are connected to the same network, and a MFP is connected to other network;
FIG. 23 is a flow chart showing the steps of process continued from FIG. 20;
FIG. 24 is a scheme of process of outputting information using a relay server when a communication terminal and a MFP are connected to the same network, and an information processing apparatus is connected to other network;
FIG. 25A and 25B are a flow chart showing the steps of process continued from FIG. 23;
FIG. 26 is a scheme of process of outputting information using a relay server when an information processing apparatus and a MFP are connected to the same network, and a communication terminal is connected to other network;
FIG. 27 is a scheme of other example process of outputting information using a relay server when an information processing apparatus and a MFP are connected to the same network, and a communication terminal is connected to other network; and
FIG. 28 is a scheme of further other example process of outputting information using a relay server when an information processing apparatus and a MFP are connected to the same network, and a communication terminal is connected to other network;

The accompanying drawings are intended to depict exemplary embodiments of the present invention and should not be interpreted to limit the scope thereof. The accompanying drawings are not to be considered as drawn to scale unless explicitly noted, and identical or similar reference numerals designate identical or similar components throughout the several views.

### DETAILED DESCRIPTION

A description is now given of exemplary embodiments of the present invention. It should be noted that although such terms as first, second, etc. may be used herein to describe various elements, components, regions, layers and/or sections, it should be understood that such elements, components, regions, layers and/or sections are not limited thereby because such terms are relative, that is, used only to distinguish one element, component, region, layer or section from another region, layer or section. Thus, for example, a first element, component, region, layer or section discussed below could be termed a second element, component, region, layer or section without departing from the teachings of the present invention.

In addition, it should be noted that the terminology used herein is for the purpose of describing particular embodiments only and is not intended to be limiting of the present invention. Thus, for example, as used herein, the singular forms "a", "an" and "the" are intended to include the plural forms as well, unless the context clearly indicates otherwise. Moreover, the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Furthermore, although in describing views illustrated in the drawings, specific terminology is employed for the sake of clarity, the present disclosure is not limited to the specific terminology so selected and it is to be understood that each specific element includes all technical equivalents that have a similar function, operate in a similar manner, and achieve a similar result. Referring now to the drawings, apparatuses or systems according to example embodiments are described hereinafter with reference to drawings.

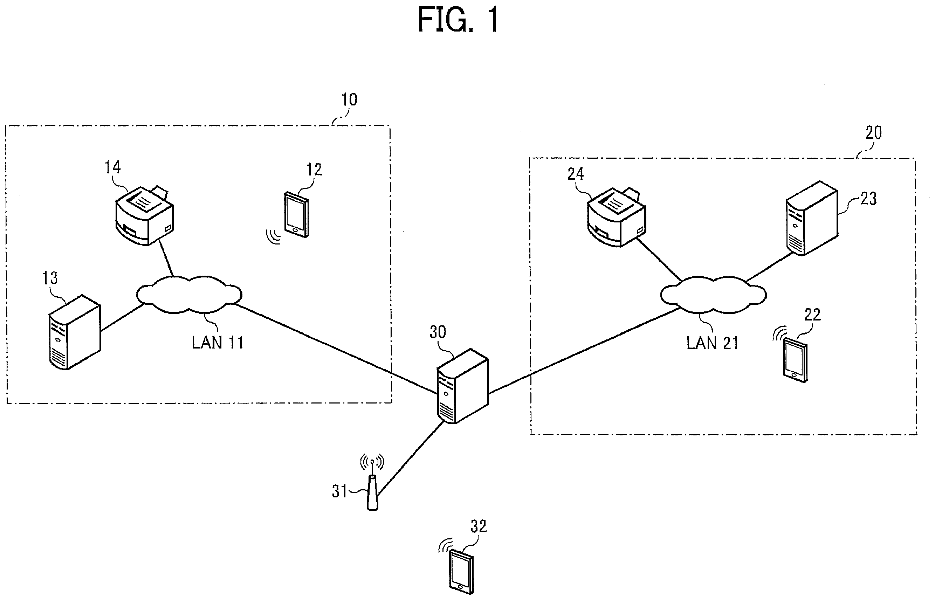

FIG. 1 is an example configuration of an information processing system according to an example embodiment. The information processing system includes, for example, a first network environment 10, a second network environment 20 different from the first network environment 10, and a third network environment different from the first network environment 10 and the second network environment 20. FIG. 1 illustrates a configuration using different three network environments, but one or different two network environments can be used, or four or more different network environments can be used.

The first network environment 10 includes, for example, a local area network (LAN) 11 configured in the headquarter of one company. The LAN 11 can be connected to a communication terminal 12, an information processing apparatus 13, and a multifunctional peripheral (MFP) 14 used as an information outputting apparatus. The number of these apparatuses or devices is not limited one, but two or more of these apparatuses or devices can be connected to the LAN 11. As to the information outputting apparatus, a network projector or a cloud board can be used instead of the MFP 14, or a network projector or a cloud board can be used with the MFP 14, wherein the network projector or a cloud board can output and display information.

The second network environment 20 includes, for example, a local area network (LAN) 21 configured in a branch office of one company. The LAN 21 can be connected to a communication terminal 22, an information processing apparatus 23, and a MFP 24 used as an information outputting apparatus. Two or more of these apparatuses or devices can be also connected to the LAN 21. Further, a network projector or a cloud board can be used instead of the MFP 24, or a network projector or a cloud board can be used with the MFP 24.

The third network environment includes a relay server 30 used as a relay apparatus that relays communication between the first network environment 10 and the second network environment 20 using a wide area network (WAN) such as the Internet or 3G line/LTE. The relay server 30 is connected to a base station 31, and can communicate with a communication terminal 32 using 3G line/LTE.

Configuration and function of corresponding apparatuses or devices existing on the first network environment 10 and the second network environment 20 are the same or similar. Therefore, apparatuses or devices existing on the first network environment 10 are described, and corresponding apparatuses or devices existing on the second network environment are not described in detail.

The LAN 11 can be wired LAN or wireless LAN as long as communication can be conducted between apparatuses or devices existing on the first network environment 10, wherein the apparatuses or devices are connected with wires in the wired LAN, and the apparatuses or devices are connected with wireless communication in the wireless LAN.

When the LAN 11 is a wired LAN, a base station known as an access point can be provided so that the communication terminal 12 using wireless communication can be connected to the wired LAN. The LAN 11 can be connected to the relay server 30 using WAN such as the Internet. Further, a firewall used as a communication regulating apparatus to regulate or limit communication can be provided between the LAN 11 and the relay server 30.

The communication terminal 12 can be a smartphone, a personal digital assistant (PDA), and a tablet terminal having a communication function using wireless communication such as Wi-Fi and telephone line network such as 3G/LTE. Further, the communication terminal 12 includes a function of displaying and storing of various files and data, a function of transmitting/receiving various files and data, and a function of capturing a target object using an image capturing device such as a camera. Further, the communication terminal 12 can also include a communication function by near-distance wireless communication using infrared communication, Bluetooth (registered trademark), and Wi-Fi Direct. Further, the communication terminal 32 in the third network environment may have similar function of the communication terminal 12.

The information processing apparatus 13, which can be a personal computer (PC) or a workstation, includes a function of a file server that can obtain data from other apparatuses or devices and store data. Further, the information processing apparatus 13 also includes a function converting data format to pre-set data format when data is stored, and a function of mail transmission. Further, the information processing apparatus 13 also includes a function to transmit data requested from the communication terminal 12 to the MFP 14 to conduct printing of requested data at the MFP 14.

The MFP 14 is an image forming apparatus or image outputting apparatus having a plurality of functions such as a copy function, a facsimile function, a print function, a scanner function, and an input image distribution function. Further, the MFP 14 also includes a function of receiving data transmitted from the information processing apparatus 13 and printing the received data, and a function of transmitting image data scanned by the scanner to the information processing apparatus 13 to store the image data.

The network projector, which can be used as other example of the information outputting apparatus, includes a function of accessing the information processing apparatus 13 via the LAN 11, and projecting and displaying data transmitted from the information processing apparatus 13 on a screen.

The relay server 30 has a function of relaying communication so that each of the apparatuses or devices existing in the first network environment 10 can be accessed and used from an external network, in which data stored in the information processing apparatus 13 can be transferred, and requests can be communicated among the apparatuses or devices. With this configuration, the communication terminal 32 can output a request to the information processing apparatus 13 existing in the first network environment 10 via the relay server 30, and data stored in the information processing apparatus 13 can be transmitted to the MFP 14 and printed at the MFP 14.

A description is given of function of the relay server 30. The relay server 30 relays communication between different networks. For example, the relay server 30 relays a request from the communication terminal 32 to the information processing apparatus 13 and/or the MFP 14 when the communication terminal 32 exists on a network different from a network where the information processing apparatus 13 and/or the MFP 14 exists, and the relay server 30 relays a process result from the information processing apparatus 13 and/or the MFP 14 to the communication terminal 32 as a response to the above request. Therefore, the relay server 30 can function as a relay apparatus.

The relay server 30 has a queue for each of the apparatuses or devices, corresponding to each of the apparatuses or devices used for transmitting a request to the information processing apparatus 13 and/or the MFP 14. Each queue is, for example, a first-in-first-out (FIFO) queue. Each queue is assigned with a contact identification (ID) used as identification information so that each of the apparatuses or devices can be identified uniquely.

Upon receiving a request with a designated contact ID, the relay server 30 puts the request in a queue assigned with the contact ID. When the relay server 30 receives an obtaining request from an apparatus having the designated contact ID to obtain the request, the relay server 30 retrieves the request from the queue for the concerned apparatus, and transmits the request to the concerned apparatus.

The information processing system enables communication between different networks via the relay server 30. Therefore, communication can be conducted between a branch office, the headquarter, and outside the office. For example, by using a communication terminal, data stored in an information processing apparatus disposed at one place (e.g., headquarter or branch office) can be printed by using a MFP disposed at other place (e.g., headquarter or branch office), and further, in addition to printing of data, display of data can be devised. Therefore, by using a communication terminal at a meeting in a branch office, data stored in the headquarter can be obtained, and the data can be printed by using a MFP disposed at the branch office for distributing printed data, and further the data can be displayed using a projector.

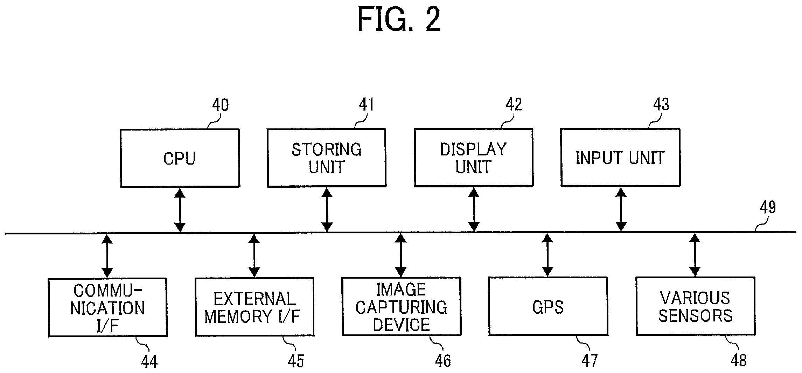

A hardware configuration of the communication terminal 12 is described with reference to FIG. 2. The communication terminals 22 and 32 illustrated in FIG. 1 have similar configurations. The communication terminal 12 includes, for example, a central processing unit (CPU) 40, a storing unit 41, a display unit 42, an input unit 43, a communication interface (I/F) 44, an external memory interface (I/F) 45, an image capturing device 46, a global positioning system (GPS) 47, and various sensors 48. These units can be connected by a bus 49 with each other, with which data can be communicated with each other.

The CPU 40 controls the communication terminal 12 as a whole. The CPU 40 executes an operating system (OS) for the communication terminal and various application programs stored in the storing unit 41 such as a memory to conduct various given processing. The storing unit 41 stores the OS, various application programs, and data such as various setting information and image. The storing unit 41 includes a read only memory (ROM) storing program, a random access memory (RAM) used as a working area when the CPU 40 executes program and conducts various controls, and a hard disk drive (HDD) or flash memory that can store setting information and data.

The display unit 42 is a display that displays various data on a screen. The input unit 43 is used by a user for inputting various information (i.e., inputting operation), and the input unit 43 receives information input by a user. The display unit 42 and the input unit 43 can be different devices, but a touch panel having both functions of the display unit 42 and the input unit 43 can be employed.

The communication I/F 44 is connected to the LAN 11 so that the communication terminal 12 can communicate with other apparatuses or devices such as the information processing apparatus 13 and the MFP 14. The communication I/F 44 includes a transmission/reception unit to devise wireless LAN connection using Wi-Fi, telephone line connection, near distance wireless connection or the like. The external memory I/F 45 is connected to an external memory such as SD card so that data can be input and output between the storing unit 41 and the external memory.

The image capturing device 46 is a camera having a lens and an image capturing element. The image capturing device captures an image of a target object, and outputs as image data of still image data or movie image data. The target object is, for example, scenes, persons, displayed code such as bar code and QR code (registered trademark). When the displayed code is captured, and output as image data, text data in the displayed code can be read using a given application program.

The GPS 47 is a GPS receiver to obtain coordinates of a current position from a GPS satellite. The various sensors 48 includes, for example, an acceleration sensor, a magnetic sensor, a proximity sensor, and an illuminance sensor. The acceleration sensor measures acceleration of an object. The magnetic sensor measures intensity and direction of magnetic field. The proximity sensor is a sensor to detect the presence of nearby objects without any physical contact, and switches ON and OFF when a target object comes to nearby the proximity sensor. The illuminance sensor detects illuminance around an object.

The communication terminal 12 can further include a microphone used as an audio input device to input audio, and a speaker used as an audio output device to output audio.

Each of the information processing apparatus 13, the MFP 14, and the relay server 30 include, for example, a CPU, a storing unit, a communication I/F, and further a display unit such as a liquid crystal display, and an input unit as hardware. The MFP 14 further includes a plotter, a scanner, and a plotter I/F that controls the plotter, and a scanner I/F that controls the scanner to devise a copy function, a facsimile function, a print function, and a scanner function.

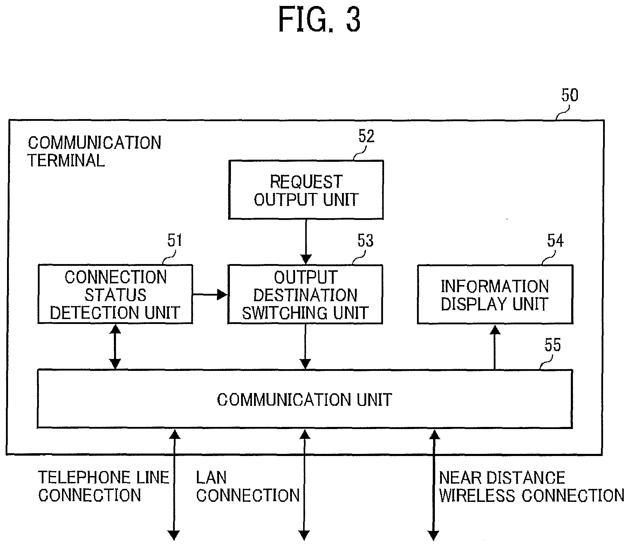

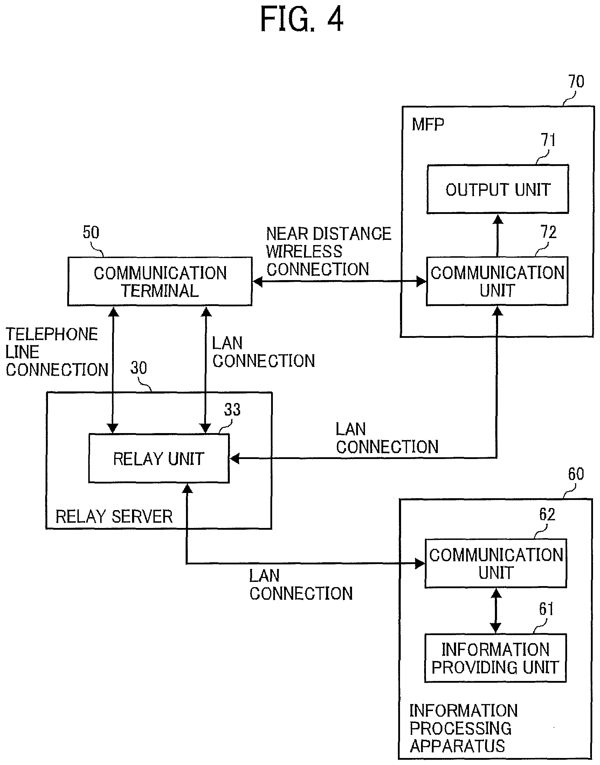

A description is given of function of the communication terminal 50 with reference to FIG. 3, and a description is given of function of the information processing apparatus 60, the MFP 70, and the relay server 30 with reference to FIG. 4. A communication terminal 50 can be any one of the communication terminals 12, 22, 32 in FIG. 1. An information processing apparatus 60 can be any one of the information processing apparatuses 13, 23 in FIG. 1. The MFP 70 can be any one of the MFPs 14, 24 in FIG. 1.

A description is given of function of the communication terminal 50. The communication terminal 50 includes at least, a connection status detection unit 51, a request output unit 52, and an output destination switching unit 53, and further includes an information display unit 54, and a communication unit 55 as illustrated in FIG. 3. The connection status detection unit 51, the request output unit 52, and the output destination switching unit 53 can be devised by executing program stored in a storing unit in the communication terminal 50 using a CPU. The information display unit 54 can be devised using a display, and the communication unit 55 can be devised using a communication I/F.

The connection status detection unit 51 can conduct an inquiry to one or a plurality of apparatuses via at least one network. Based on an inquiry result, the connection status detection unit 51 detects network connection status of the communication terminal 50 and each of the apparatuses, and obtains the connection status, in which the connection status detection unit 51 can be used as an obtaining unit. If the communication terminal 50 can be connected to a network using LAN connection, the communication terminal 50 transmits an inquiry packet to the network connected by the LAN connection.

When one of the information processing apparatus 60 and the MFP 70, or both of the information processing apparatus 60 and the MFP 70 are connected to the concerned network (see FIG. 4), the information processing apparatus 60 and the MFP 70 respond to the packet. If a response is received from both of the information processing apparatus 60 and the MFP 70 within a given time period, the connection status detection unit 51 detects that the communication terminal 50, the information processing apparatus 60, and the MFP 70 are connected to the same network. By contrast, if a response is received from only one of the information processing apparatus 60 and the MFP 70 within a given time period, the connection status detection unit 51 detects that the communication terminal 50 and one of the information processing apparatus 60 and the MFP 70 are connected to the same network, and another one of the information processing apparatus 60 and the MFP 70 is connected to other network.

If a network connectable by the LAN connection does not exist, the communication terminal 50 can be connected to the information processing apparatus 60 using telephone line connection via the relay server 30, in which the connection status detection unit 51 transmits a packet addressed to the information processing apparatus 60 to the relay server 30. Further, instead of transmitting the packet addressed to the information processing apparatus 60, the connection status detection unit 51 can transmit a packet addressed to the MFP 70, which cooperatively conducts a target process with the information processing apparatus 60 or the like.

The information processing apparatus 60 accesses the relay server 30 periodically, and receives a packet addressed to the information processing apparatus 60 via a network connected to the information processing apparatus 60. If the same packet can also reach the MFP 70, both of the information processing apparatus 60 and the MFP 70 can return a response. If only the information processing apparatus 60 receives the concerned packet, only the information processing apparatus 60 returns a response. The response is transmitted to the relay server 30 as a response addressed to the communication terminal 50, and the response addressed to the communication terminal 50 is transmitted to the communication terminal 50 while the communication terminal 50 accesses the relay server 30 periodically.

When receiving this response within a given time period from the information processing apparatus 60 and the MFP 70, the connection status detection unit 51 detects that the information processing apparatus 60 and the MFP 70 are connected to the same network. By contrast, when receiving this response within a given time period only from the information processing apparatus 60, the connection status detection unit 51 detects that all of the communication terminal 50, the information processing apparatus 60, and the MFP 70 are connected to different networks.

Further, when detecting that all of the communication terminal 50, the information processing apparatus 60, and the MFP 70 are connected to different networks, the connection status detection unit 51 instructs the communication unit 55 whether near distance wireless connection can be conducted to the MFP 70. If the near distance wireless connection can be conducted to the MFP 70, the connection status detection unit 51 detects that the communication terminal 50 and the MFP 70 can be connected to the same near distance wireless network.

The request output unit 52 outputs a request for executing a designated or target process to one of a plurality of apparatuses, in which the request output unit 52 can function as a generating unit to generate a request such as an execution request (e.g., output request) and a transmission unit that transmits the request. The designated or target process is, for example, transmitting data stored in the information processing apparatus 60 to the MFP 70 to conduct printing at the MFP 70. An output-destination of the request is, for example, the information processing apparatus 60 that can provide a function for the designated or target process.

Based on a network connection status detected by the connection status detection unit 51, the output destination switching unit 53 determines an output-destination apparatus to be output with the request, and switches an output-destination apparatus to the determined apparatus, in which the output destination switching unit 53 can function as a determination unit that determines an output destination. A detail of process of determing a to-be-used apparatus, used as the output-destination apparatus, will be described later.

The information display unit 54 displays a data list obtained from the information processing apparatus 60 to view data stored in the information processing apparatus 60, and displays data contents selected from the data list. The information display unit 54 displays data, and can also display a screen used for registering an apparatus or device. The communication unit 55 uses various network connections for communication with one or more external apparatuses. The communication unit 55 conducts communication using a network connection, which may be one of LAN connection, telephone line connection, and near distance wireless connection.

As illustrated in FIG. 4, the relay server 30 includes a relay unit 33. The relay unit 33 can be devised by executing program stored in a storing unit of the relay server 30 using a CPU. The relay unit 33 has queue corresponding to each of the apparatuses or devices, and puts a request and data addressed to each of the apparatuses or devices in a queue corresponding to each of the apparatuses or devices. Upon receiving an obtaining request from each of the apparatuses or devices, the relay unit 33 retrieves the request and data from the corresponding queue, and transmits the request and data to the corresponding apparatus or device. For example, the communication terminal 50 and the relay unit 33 can be connected by using LAN connection or telephone line connection while the information processing apparatus 60 and the MFP 70 can be connected only by LAN connection.

The information processing apparatus 60 includes an information providing unit 61, and a communication unit 62. The information processing apparatus 60 includes a storing unit. The information providing unit 61 can be devised by executing program stored in the storing unit of the information processing apparatus 60 using a CPU. The communication unit 62 can be devised by executing program stored in the storing unit of the information processing apparatus 60 using the CPU, and the communication I/F.

The communication unit 62 transmits an obtaining request to the relay unit 33 to obtain a request and data addressed to the information processing apparatus 60, and further outputs a request and data addressed to the communication terminal 50 and addressed to the MFP 70 to the relay unit 33. The communication unit 62 interprets the obtained request, and transfers the concerned request to the information providing unit 61 when providing of data list and data are required. By referring concerned request, the information providing unit 61 searches a data list stored in a storing unit such as a memory disposed in the formation processing apparatus 60, and required data from the data list, and returns data to the communication unit 62. As a response to the concerned request, the communication unit 62 transmits the data to the relay unit 33 so that data can be transmitted to the communication terminal 50 or the MFP 70.

The MFP 70 includes an output unit 71, and a communication unit 72. The output unit 71 can be devised by a plotter I/F and a plotter included in the MFP 70, and the communication unit 72 can be devised by executing program stored in a storing unit of the MFP 70 using a CPU, and a communication I/F.

The communication unit 72 can obtain a request and data addressed to the MFP 70 from the communication terminal 50 using a near distance wireless connection, or transmitting an obtaining request to the relay unit 33. The communication unit 72 transmits a request and data addressed to the information processing apparatus 60 to the relay unit 33. The communication unit 72 interprets the obtained request. If the obtained request is an output request of the obtained data, the communication unit 72 transfers the data and the output request to the output unit 71.

The output unit 71 refers the output request received from the communication unit 72, and prints out the received data based on the output request. The output request includes print setting information such as sheet type, sheet size, and number of sheets to be output. The output unit 71 outputs (e.g., prints) data based on the print setting information.

When conducting communication between the communication terminal 50 and the information processing apparatus 60 and the MFP 70, at first, a process of pairing two apparatuses is required to register each of the apparatuses as an accessible apparatus. This process may be referred to as a pairing process. In this description, it is assumed that pairing between the communication terminal 50 and the information processing apparatus 60, pairing between the information processing apparatus 60 and the MFP 70 are already completed, and pairing between the communication terminal 50 and the MFP 70 is to be conducted.

At first, a display unit disposed for the MFP 70, which is one of the apparatuses to be paired, displays information of a to-be-registered apparatus such as QR code (registered trademark) or color code, and access code including access information used for effecting the concerned registration. Therefore, the MFP 70 retains this code. The code is displayed on the display unit disposed on the MFP 70 but not limited hereto, but the code can be displayed on a PC connected to the MFP 70, and a display unit of other MFP.

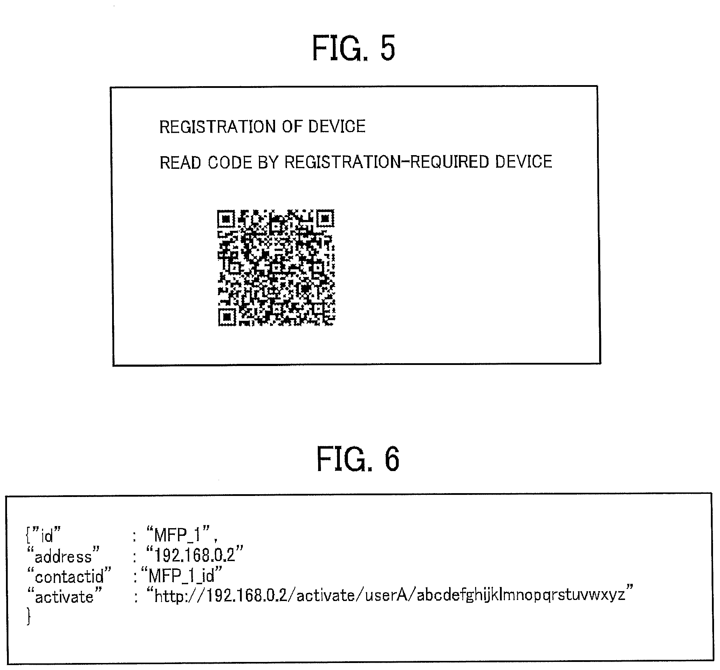

The display unit can display a screen illustrated in FIG.5, in which the screen displays a two dimensional code. For example, the two dimensional code includes information illustrated in FIG.6. The information includes, for example, apparatus identifier (apparatus ID) of the MFP 70 to be registered, internet protocol (IP) address of the MFP 70, contact ID of the MFP 70, and link information used for activation such as access information. The apparatus ID and IP address are used when communicating with an apparatus, and the contact ID are used when conducting communication via the relay server 30.

The apparatus ID and the contact ID can be text, sign, number, and combination of these. The IP address is, for example, "192.168.0.2" as illustrated in FIG.6. The link information can be uniform resource locator (URL), uniform resource identifier (URI), or internet protocol (IP) address. In this example, a configuration having a link is shown, but one-time password can be used. The one-time password is a password that can be used only one time for verification or authentication, which can be text, sign, number such as "0123456789" and combination of these. The one-time password is not limited hereto. For example, the one-time password can be generated by using manufacturing number, encoding number, time information registered to the MFP 70.

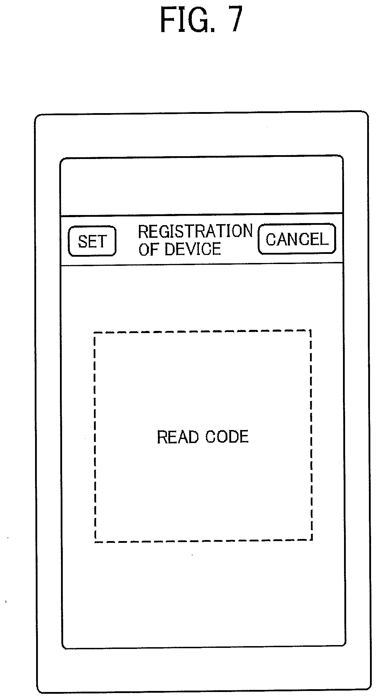

A user captures the two dimensional code displayed on the display unit of the MFP 70 using the communication terminal 50 as illustrated in FIG.7. The user operates the communication terminal 50 to set the two dimensional code displayed on the display unit within a frame displayed as "read code" of the communication terminal 50, and presses a capture button to capture the code.

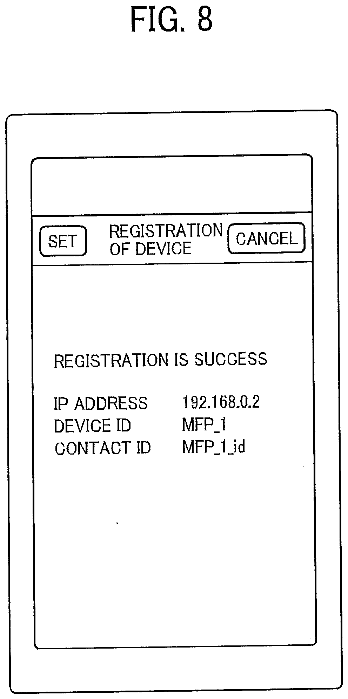

If the two dimensional code includes link information used for activation, by accessing to the link and effecting the registration, the registration completes successfully. FIG.8 illustrates a screen displayed on the display unit when the registration completes successfully. When the registration completes successfully, a completion message, IP address, apparatus ID, and contact ID of the MFP 70 are displayed. By registering information of the MFP 70 to the communication terminal 50, the communication terminal 50 can access and use the MFP 70.

When the communication terminal 50 directly accesses the MFP 70, the communication terminal 50 can access the MFP 70 using the apparatus ID and IP address. When the communication terminal 50 accesses the MFP 70 via the relay server 30, the communication terminal 50 can access the MFP 70 using the contact ID. Further, when conducting communication with other apparatus, the communication terminal 50 can access other apparatus using information registered by the above described process. Further, paring of the information processing apparatus 60 and the communication terminal 50 can be devised similar to the above described method.

Further, if the paring of the communication terminal 50 and the information processing apparatus 60, and the paring of the information processing apparatus 60 and the MFP 70 are already completed, the above described in-advance registration of the MFP 70 and the communication terminal 50 is not required.

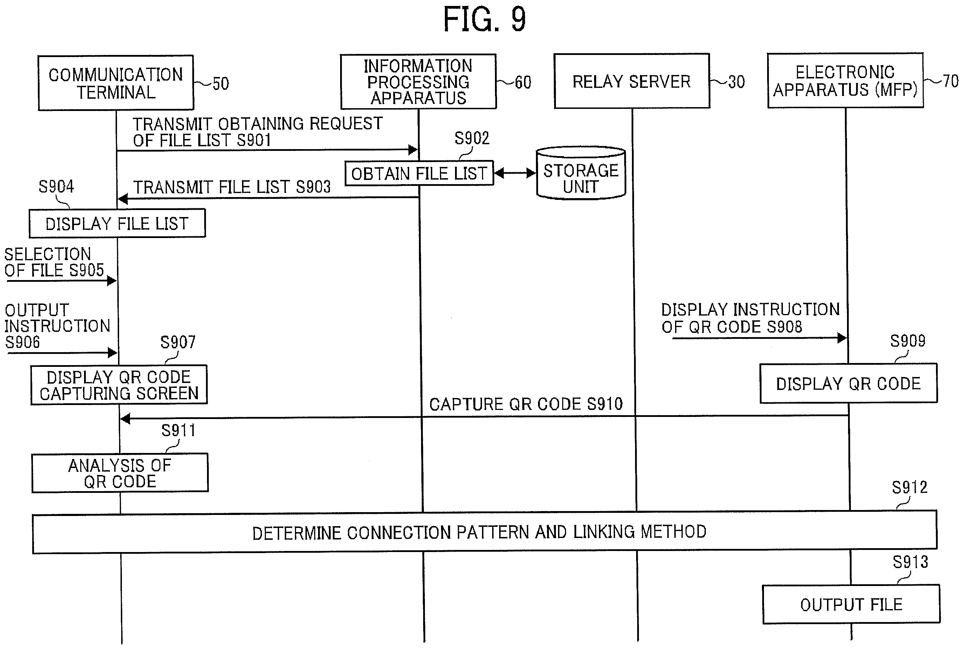

A description is given of a case that an in-advance registration is not conducted with reference to FIG. 9. In a case of FIG. 9, a file stored in a storage unit of the information processing apparatus 60 is obtained by the communication terminal 50, and an electronic apparatus such as the MFP 70 executes an output operation or outputting process but not limited hereto. For example, a file stored in a storage unit, not disposed in the information processing apparatus 60 but disposed at other server in a cloud service or network can be output, or a file stored in the communication terminal 50 can be output.

The communication terminal 50 transmits an obtaining request of a file list to the information processing apparatus 60 (step S901). Upon receiving the obtaining request from the communication terminal 50, the information processing apparatus 60 obtains the file list stored in a storage unit such as a memory disposed for the information processing apparatus 60 (step S902). Then, the information processing apparatus 60 transmits the file list obtained at step S802 to the communication terminal 50 (step S903). In this example case, the communication terminal 50 and the information processing apparatus 60 can communicate directly with each other for conducting the process of steps S901 to S903 but not limited hereto. For example, the communication terminal 50 and the information processing apparatus 60 can conduct the process of steps S901 to S903 via the relay server 30.

Upon receiving the file list from the information processing apparatus 60, the communication terminal 50 displays the received file list on the display unit 42 of the communication terminal 50 (step S904). The communication terminal 50 receives a user selection of one or more files selected from the displayed file list by the user (step S905), and receives an output instruction of the selected file (step S906). Upon receiving the output instruction, the communication terminal 50 displays a QR code (registered trademark) capturing screen (see FIG.7) on the display unit 42 so that the capturing device 46 can be ready for capturing an image (step S907).

Upon receiving a display instruction of the QR code (registered trademark) from the user (step S908), the electronic apparatus such as the MFP 70 displays a QR code (registered trademark) illustrated in FIG.5 on a display unit of the electronic apparatus (step S909). Then, the communication terminal 50 captures the QR code (registered trademark) displayed on the display unit of the electronic apparatus such as the MFP 70 (step S910). The process at steps S908 and S909 can be conducted at any time before capturing the QR code (registered trademark) at step S910. For example, the process of steps S908 and S909 can be conducted before step S901.

The communication terminal 50 analyses the captured QR code (registered trademark), and obtains information illustrated in FIG.6 used for identifying a to-be-used electronic apparatus (step S911). Then, the information processing system determines a connection pattern and a linking method for each of the apparatuses, which will be described later (step S912). The file and the output request of the file are transmitted to the MFP 70 using the determined method, and the MFP 70 conducts an output of file such as printing of data (step S913).

By conducting the above described steps S901 to S911, the communication terminal 50 can obtain information to identify the to-be-used MFP 70 and can determine and confirm the connection pattern of the apparatuses. Further, by conducting the above described processing, the in-advance registration between the communication terminal 50 and the MFP 70 can be omitted. Further, the MFP 70 is not required to retain information of the paired communication terminal 50.

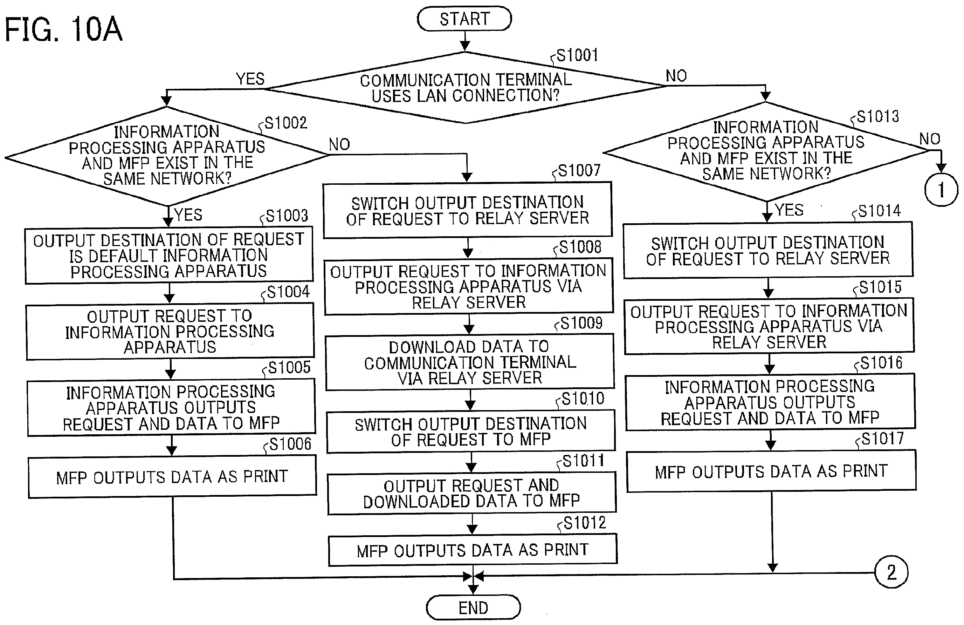

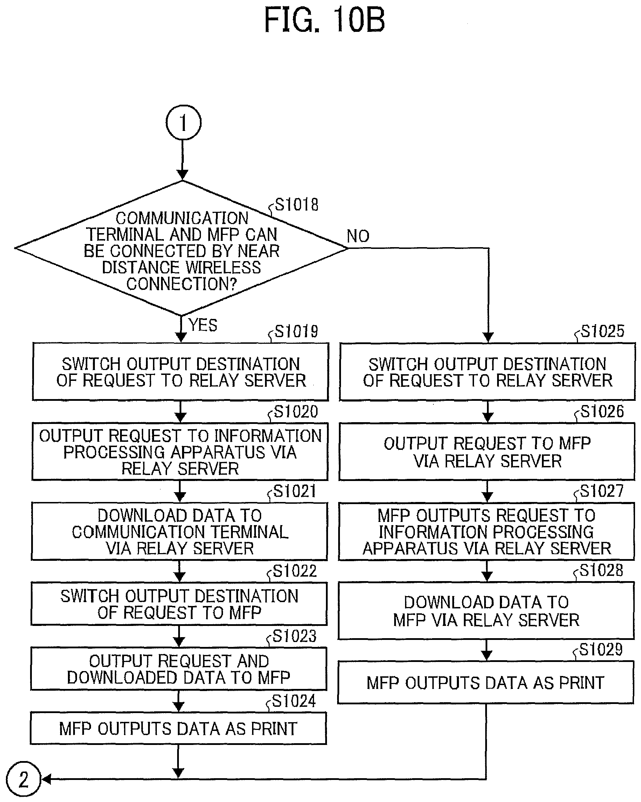

A description is given of processing, corresponding to the above step S912, conductable by the information processing system with reference to FIGs. 10 to 19. FIGs. 10A and 10B are a flowchart showing the steps of processing corresponding to the above step S812. In this processing, it is assumed that the communication terminal 50 exists near the MFP 70, pairing between the communication terminal 50 and the information processing apparatus 60, pairing between the communication terminal 50 and the MFP 70, and pairing between the information processing apparatus 60 and the MFP 70 are already completed, or the communication terminal 50 has already obtained information for identifying the MFP 70. Therefore, when conducting communication with each other, communication can be conducted using registered apparatus ID, IP address, and contact ID.

The process starts from step S1000. At step S1001, it is determined whether the communication terminal 50 is connected to a network using a LAN connection, in which the connection status detection unit 51 of the communication terminal 50 conducts this determination by referring a network connection used by the communication unit 55. It can determine whether the communication terminal 50 is connected to a network using LAN connection by determining whether the communication terminal 50 such as a smart phone or a tablet conducts a communication using a carrier communication or Wi-Fi connection. For example, in a case of FIG. 1, it can determine that the communication terminal 12 and the communication terminal 22 are connected to LAN, and it can determine that the communication terminal 32 is not connected to LAN.

If it is determined that the communication terminal 50 uses the LAN connection, the process proceeds to step S1002. At step S1002, the connection status detection unit 51 transmits a packet to a connected network. If the concerned packet can be transmitted and reached to the information processing apparatus 60 and the MFP 70, the connection status detection unit 51 can receive a response from these apparatuses. If the connection status detection unit 51 receives a response from these apparatuses within a given time period, the communication terminal 50 detects that communication terminal 50, the information processing apparatus 60, and the MFP 70 exist in the same network, and then the process proceeds to step S1003.

The packet can be, for example, a connection request to each apparatus. If the packet is the connection request to each apparatus, and a response indicating that connection is possible with the apparatus is received (e.g., response indicating that data transmission and receiving can be conducted is received), it can determine that the apparatus exists in the same network, which means connection with the apparatus can be conducted. By contrast, if no response is received, it can determine that the apparatus does not exist in the same network, which means it is determined that connection with the apparatus cannot be conducted.

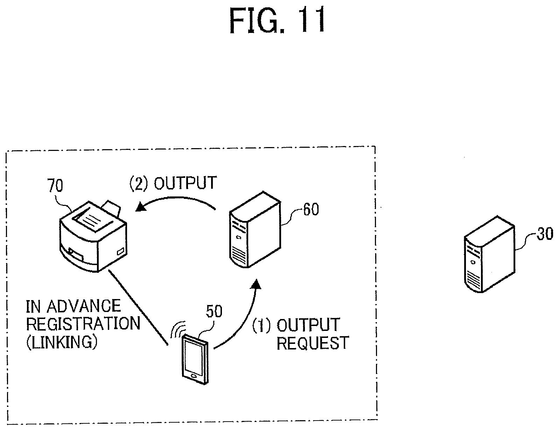

When detecting that die apparatuses exist in the same network, as illustrated in FIG. 11, three apparatuses can communicate with each other, in which communication load such as transmitting and receiving data and request between the information processing apparatus 60 and the MFP 70 can be reduced, which is a process conduct-able at the fastest speed. In this case, the communication terminal 50 obtains a list of data stored in the information processing apparatus 60 from the information processing apparatus 60, and receives information of data (e.g., identification information of electronic data) selected by a user while the user views the data list, in advance. Therefore, the communication terminal 50 includes a receiving unit such as the input unit 43 that can receive an input by a user. Then, an output request is transmitted from the communication terminal 50, and then data stored in the information processing apparatus 60 is printed (i.e., output) by using the MFP 70.

As the first process, the communication terminal 50 outputs the received information of data to the information processing apparatus 60 by including the received information of data in the output request. The output request includes an instruction of print output by the MFP 70, which is registered by conducting the in-advance pairing and linked to the communication terminal 50.

As the second process, the information processing apparatus 60 receives the output request from the communication terminal 50, interprets the output request, searches the corresponding data from the stored data, and transmits the searched data to the MFP 70 with the output request. As the third process, the MFP 70 interprets the output request received from the information processing apparatus 60, and outputs (i.e., prints) the received data based on print setting information included in the output request.

This process flow is described with reference to FIGs. 10A and 10B. At step S1003, the output destination switching unit 53 sets an output destination of request to the information processing apparatus 60, which is a default setting. In this example case, because the information processing apparatus 60 has a function of transmitting stored data to the MFP 70 and conducting a print output by using the MFP 70, the information processing apparatus 60 is set as the default apparatus. If a default apparatus is set to a different apparatus, at step S1003, the output destination switching unit 53 switches an output destination of request to the information processing apparatus 60.

At step S1004, the output destination switching unit 53 outputs the request directly to the information processing apparatus 60 via the communication unit 55. At step S1005, based on the request, the information processing apparatus 60 searches data selected by a user from the stored data, and outputs the request and the data to the MFP 70. At step S1006, the MFP 70 outputs (i.e., prints) the data based on print setting information included in the request, and the process ends at step S1030.

If it is detected that any one of the information processing apparatus 60 and the MFP 70 exists on the same network of the communication terminal 50 at step S1002 such as when detecting that the MFP 70 exists on the same network of the communication terminal 50, the process proceeds to step S1007. Further, if none of apparatuses is detected, telephone line connection or near distance wireless connection can be used instead of LAN connection.

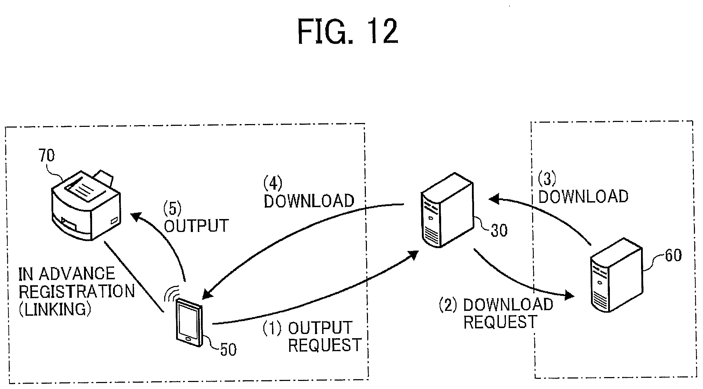

If the communication terminal 50 and the MFP 70 are connected to the same network, and the information processing apparatus 60 is connected to other network, data cannot be transmitted from the information processing apparatus 60 to the MFP 70 directly. In this case, as illustrated in FIG. 12, data is once downloaded to the communication terminal 50, and the downloaded data is output to the MFP 70, with which the data can be printed.

Specifically, the communication terminal 50 requests the information processing apparatus 60 to obtain a data list via the relay server 30, obtains the data list from the information processing apparatus 60, presents the data list to a user, and receives information of data selected by a user in advance. Then, the communication terminal 50 conducts an output request, and then data stored in the information processing apparatus 60 is print output by using the MFP 70.

As the first process, the communication terminal 50 and outputs the output request, by including the received information of data in the output request, to the relay server 30. As the second process, the information processing apparatus 60 obtains the output request from the relay server 30 as a download request. As the third process, the information processing apparatus 60 searches requested data from the stored data, and outputs the corresponding data to the relay server 30.

As the fourth process, the communication terminal 50 downloads the corresponding data from the relay server 30. As the fifth process, the communication terminal 50 outputs the output request and the downloaded data to the MFP 70 registered and linked in advance. Then, the MFP 70 outputs (i.e., prints) the received data based on the received print setting information included in the output request.

This process flow is described with reference to FIGs. 10A and 10B. At step S1007, the output destination switching unit 53 switches an output destination of request to the relay server 30. At step S1008, the communication terminal 50 outputs a request to the information processing apparatus 60 via the relay server 30. At step S1009, based on the request, the information processing apparatus 60 searches data selected by a user from the stored data, and then the information processing apparatus 60 downloads the corresponding data to the communication terminal 50 via the relay server 30.

At step S1010, the communication terminal 50 switches an output destination of the request to the MFP 70. At step S1011, the communication terminal 50 outputs the request and the downloaded data to the MFP 70. At step S1012, the MFP 70 outputs (i.e., prints) the received data based on print setting information included in the output request, and the process ends at step S1030.

If a network that enables LAN connection for the communication terminal 50 does not exist (step S1001: No), the communication terminal 50 can be connected to a network using telephone line connection. In this case, the process proceeds to step S1013, and the connection status detection unit 51 transmits a packet to a connected network via the relay server 30. If the concerned packet can be reached to the information processing apparatus 60 and the MFP 70, the connection status detection unit 51 receives a response from these apparatuses via the relay server 30. Then, if the connection status detection unit 51 receives a response from these apparatuses within a given time period, the connection status detection unit 51 detects that the information processing apparatus 60 and the MFP 70 exist in the same network, and the process proceeds to step S1014.

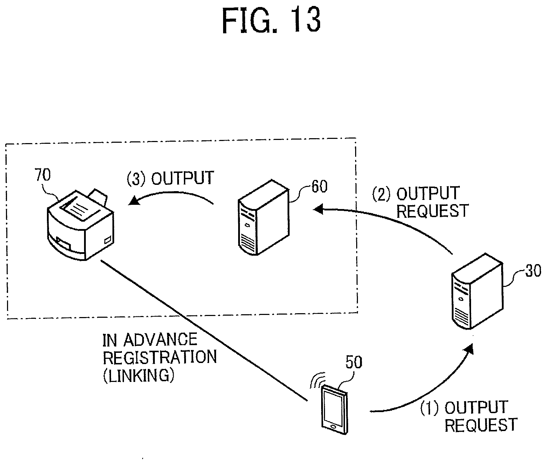

If it is detected that the information processing apparatus 60 and the MFP 70 exist in the same network (step S1013: Yes), as illustrated in FIG. 13, the communication terminal 50 can be connected to the information processing apparatus 60 via the relay server 30, and data can be transmitted and received between the information processing apparatus 60 and the MFP 70. The communication terminal 50 transmits a request of obtaining a list of data (i.e., data list) stored in the information processing apparatus 60 to the information processing apparatus 60 via the relay server 30, and obtains the data list from the information processing apparatus 60 via the relay server 30 in advance. Then, the communication terminal 50 displays the data list, and receives information of data selected by a user. Then, the communication terminal 50 conducts an output request, and then data stored in the information processing apparatus 60 is print output by using the MFP 70.

As the first process, the communication terminal 50 outputs the received information of data to the relay server 30 by including the received information of data in the output request. As the second process, the information processing apparatus 60 obtains the output request from the relay server 30. As the third process, the information processing apparatus 60 searches corresponding data from the stored data, and outputs the searched data to the MFP 70 with the output request. Then, the MFP 70 outputs (i.e., prints) the received data based on print setting information included in output request received from the information processing apparatus 60.

This process flow is described with reference to FIGs. 10A and 10B. At step S1014, the output destination switching unit 53 switches an output destination of request to the relay server 30. At step S1015, the communication terminal 50 outputs the request to the information processing apparatus 60 via the relay server 30. At step S1016, based on the request, the information processing apparatus 60 searches data selected by a user from the stored data, and outputs the request and the searched data to the MFP 70. At step S1017, the MFP 70 outputs (i.e., prints) the data based on print setting information included in the request, and the process ends at step S1030.

If a response is received only from one of these apparatuses at step S1013, it is detected that these apparatuses exist on different networks (step S1013: No), and the process proceeds to step S1018. Because it is assumed that the communication terminal 50 and the MFP 70 exist at a near position in this example case, it is determined whether the communication terminal 50 and the MFP 70 can communicate directly with other using a near distance wireless connection. If the direct communication can be conducted, data is once downloaded to the communication terminal 50, and then the communication terminal 50 can directly request the MFP 70 to conduct a print output without the relay server 30.

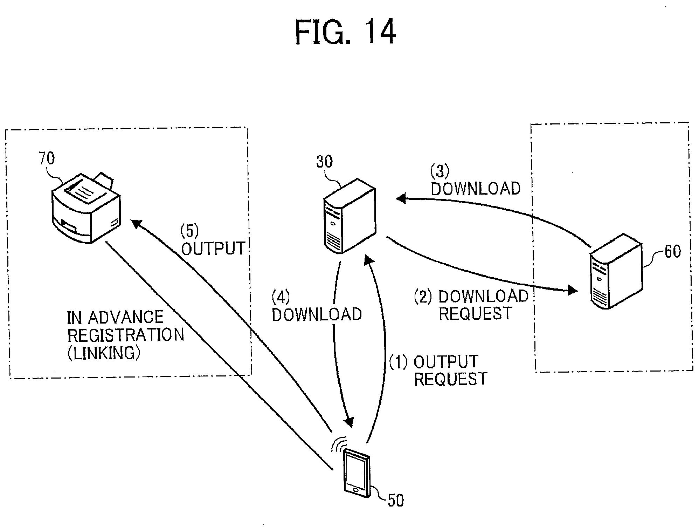

The process for this case is described with reference to FIG. 14. As illustrated in FIG. 14, the communication terminal 50, the information processing apparatus 60, and the MFP 70 exist in different network environments, and these apparatuses can be connected with each other via the relay server 30. Further, in this case, the communication terminal 50 and the MFP 70 can be connected using the near distance wireless connection.

The communication terminal 50 obtains a list of data stored in the information processing apparatus 60 from the information processing apparatus 60 via the relay server 30, presents the data list to a user, and receives information of data selected by a user in advance. Then, the communication terminal 50 conducts an output request, and then data stored in the information processing apparatus 60 is print output by using the MFP 70.

As the first process, the communication terminal 50 outputs the received information of data to the relay server 30 by including the received information of data in the output request. As the second process, the information processing apparatus 60 obtains the output request from the relay server 30 as a download request. As the third process, the information processing apparatus 60 searches corresponding data from the stored data, and outputs the corresponding data to the relay server 30.

As the fourth process, the communication terminal 50 downloads the corresponding data from the relay server 30. As the fifth process, the communication terminal 50 directly outputs the output request and the downloaded data to the MFP 70, registered and linked in advance. Then, the MFP 70 outputs (i.e., prints) the received data based on the received print setting information included in the output request.

This process flow is described with reference to FIG. 10B. At step S1019, the output destination switching unit 53 switches an output destination of request to the relay server 30. At step S1020, the communication terminal 50 outputs a request to the information processing apparatus 60 via the relay server 30. At step S1021, based on the request, the information processing apparatus 60 searches corresponding data selected by a user from the stored data, and downloads the corresponding data to the communication terminal 50 via the relay server 30.

At step S1022, the communication terminal 50 switches an output destination of request to the MFP 70. At step S1023, the communication terminal 50 outputs the request and the downloaded data to the MFP 70. At step S1024, the MFP 70 outputs (i.e., prints) the data based on print setting information included in the request, and the process ends at step S1030.

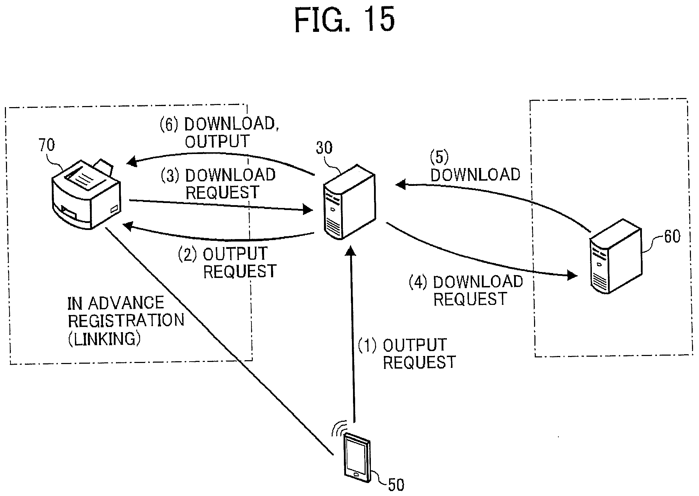

If communication cannot be conducted by the near distance wireless connection (step S1018: No), the communication terminal 50 can request to the information processing apparatus 60 and the MFP 70, and can conduct the processing at the information processing apparatus 60 and the MFP 70 only via the relay server 30. An example of this processing is described with reference to FIG. 15. As illustrated in FIG. 15, the communication terminal 50, the information processing apparatus 60, and the MFP 70 exist in different network environments. These apparatuses can be connected with each other only via the relay server 30.

Specifically, the communication terminal 50 obtains a list of data stored in the information processing apparatus 60 from the information processing apparatus 60 via the relay server 30, and receives information of data selected by a user in advance. Then, the communication terminal 50 conducts an output request, and then data stored in the information processing apparatus 60 is print output by using the MFP 70.

As the first process, the communication terminal 50 outputs the received information of data to the relay server 30 by including the received information of data in the output request. As the second process, the MFP 70 obtains the output request from the relay server 30. As the third process, the MFP 70 outputs the output request as a download request to the relay server 30. As the fourth process, the information processing apparatus 60 obtains the download request from the relay server 30.

As the fifth process, the information processing apparatus 60 searches corresponding data from the stored data, and outputs the corresponding data to the relay server 30. As the sixth process, the MFP 70 downloads the corresponding data from the relay server 30, and outputs (i.e., prints) the downloaded data based on the received print setting information included in the output request.

This process flow is described with reference to FIG. 10B. At step S1025, the output destination switching unit 53 switches an output destination of request to the relay server 30. At step S1026, the communication terminal 50 outputs a request to the MFP 70 via the relay server 30. At step S1027, the MFP 70 outputs the request to the information processing apparatus 60 via the relay server 30. At step S1028, based on the request, the information processing apparatus 60 searches data selected by a user from the stored data, and downloads the data to the MFP 70 via the relay server 30. At step S1029, the MFP 70 outputs (i.e., prints) the downloaded data based on print setting information included in the request, and the process ends at step S1030.

In the flowchart of FIGs. 10A and 10B, the communication terminal 50 is connected by the LAN connection, and when detecting only the MFP 70 exists in the same network with the communication terminal 50, the process of steps S1007 to S1012 is conducted, which can be conducted as illustrated in FIG. 12. In a case of FIG. 12, the communication terminal 50 downloads data once, and outputs the downloaded data to the MFP 70 with an output request.

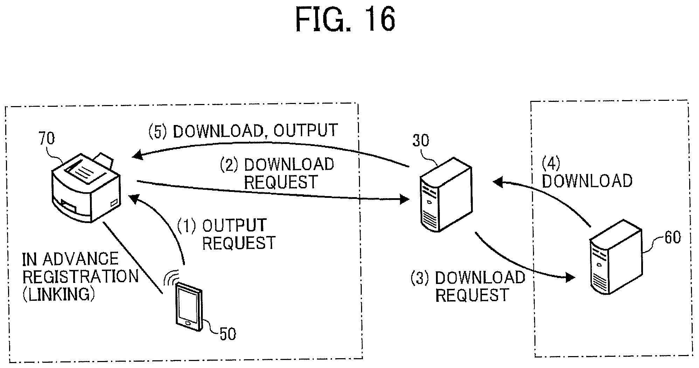

Further, in other configuration, the MFP 70 can obtain data by just outputting an output request to the MFP 70 from the communication terminal 50, which is described with reference to FIG. 16. Specifically, the communication terminal 50 obtains a list of data stored in the information processing apparatus 60 from the information processing apparatus 60 via the relay server 30, and receives information of data selected by a user in advance. Then, the communication terminal 50 conducts an output request, and data stored in the information processing apparatus 60 is print output by using the MFP 70.

As the first process, the communication terminal 50 directly outputs the received information of data to the MFP 70 by including the received information of data in the output request. As the second process, the MFP 70 outputs the output request as a download request to the relay server 30. As the third process, the information processing apparatus 60 obtains the download request from the relay server 30. As the fourth process, the information processing apparatus 60 searches corresponding data from the stored data, and outputs the corresponding data to the relay server 30. As the fifth process, the MFP 70 downloads the corresponding data from the relay server 30, and outputs (i.e., prints) the downloaded data based on the received print setting information included in the output request.

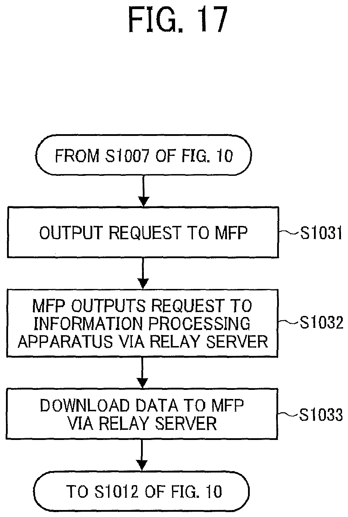

This process flow is described with reference to FIG. 17. In this case, the process until step S1007 is the same process, and the process from steps S1008 to S1011 becomes different. Specifically, at step S1031, the communication terminal 50 outputs a request to the MFP 70. At step S1032, the MFP 70 outputs the request to the information processing apparatus 60 via the relay server 30. Then, at step S1033, based on the request, the information processing apparatus 60 searches data selected by a user from the stored data, and downloads the data to the MFP 70 via the relay server 30.

In the flowchart of FIG. 10, a description is given for a case that the communication terminal 50 is connected by the LAN connection, and detecting only the MFP 70 exists in the same network with the communication terminal 50.

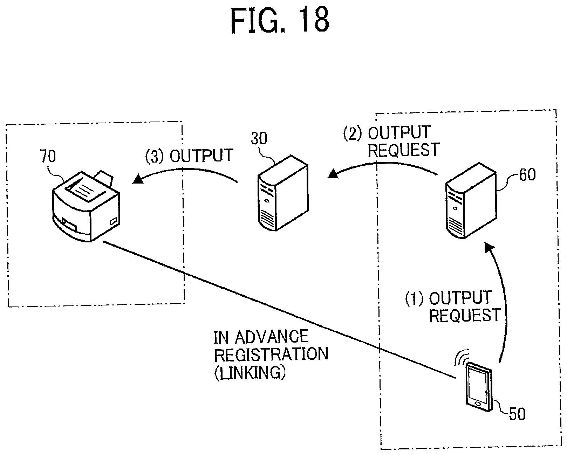

However, in actual environment, there is a case that detecting only the information processing apparatus 60 exists in the same network with the communication terminal 50. In this case, as illustrated in FIG. 18, the communication terminal 50 and the information processing apparatus 60 exist in the same network environment, and the MFP 70 exists in other network environment. Because the communication terminal 50 can be directly connected to the information processing apparatus 60 using LAN connection, the communication terminal 50 can output an output request to the information processing apparatus 60, and the information processing apparatus 60 can output the output request and data to the MFP 70 via the relay server 30.

Specifically, the communication terminal 50 obtains a list of data stored in the information processing apparatus 60 from the information processing apparatus 60, and receives information of data selected by a user in advance. Then, the communication terminal 50 conducts an output request, and then data stored in the information processing apparatus 60 is print output by using the MFP 70.

As the first process, the communication terminal 50 directly outputs the received information of data to the information processing apparatus 60 by including the received information of data in the output request. As the second process, the information processing apparatus 60 searches corresponding data from the stored data, and outputs the corresponding data to the relay server 30 with the output request. As the third process, the MFP 70 downloads the output request and data from the relay server 30, and outputs (i.e., prints) the downloaded data based on print setting information included in downloaded the output request.

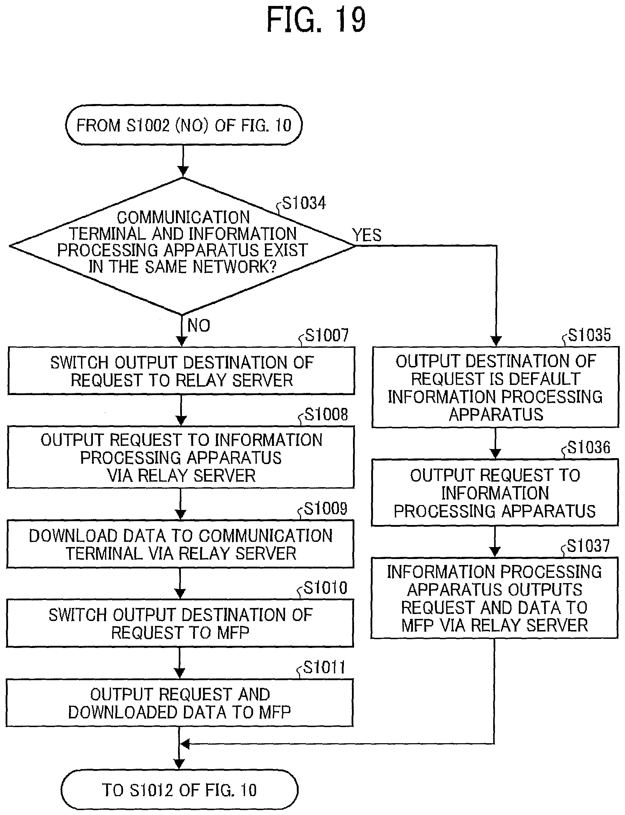

This process flow is described with reference to FIG. 19, in which the process until step S1002 of FIG. 10A is the same process, and the process from steps S1007 to S1011 becomes different. Specifically, at step S1034, it is determined whether the communication terminal 50 and the information processing apparatus 60 exist in the same network, which can be determined using information of network connection status detected by the connection status detection unit 51.

If the communication terminal 50 and the information processing apparatus 60 do not exist in the same network (step S1034: No), which means if the communication terminal 50 and the MFP 70 exist in the same network, as illustrated in FIG. 19, the process of steps S1007 to S1011 of FIG. 10 is conducted. By contrast, if the communication terminal 50 and the information processing apparatus 60 exist in the same network (step S1034: Yes), the process proceeds to step S1035, and an output-destination of request is set to the information processing apparatus 60, which is a default setting. Then, at step S1036, the communication terminal 50 outputs a request to the information processing apparatus 60. At step S1037, the information processing apparatus 60 searches corresponding data from the data stored in the information processing apparatus 60, and transmits the corresponding data to the MFP 70 with the request via the relay server 30.

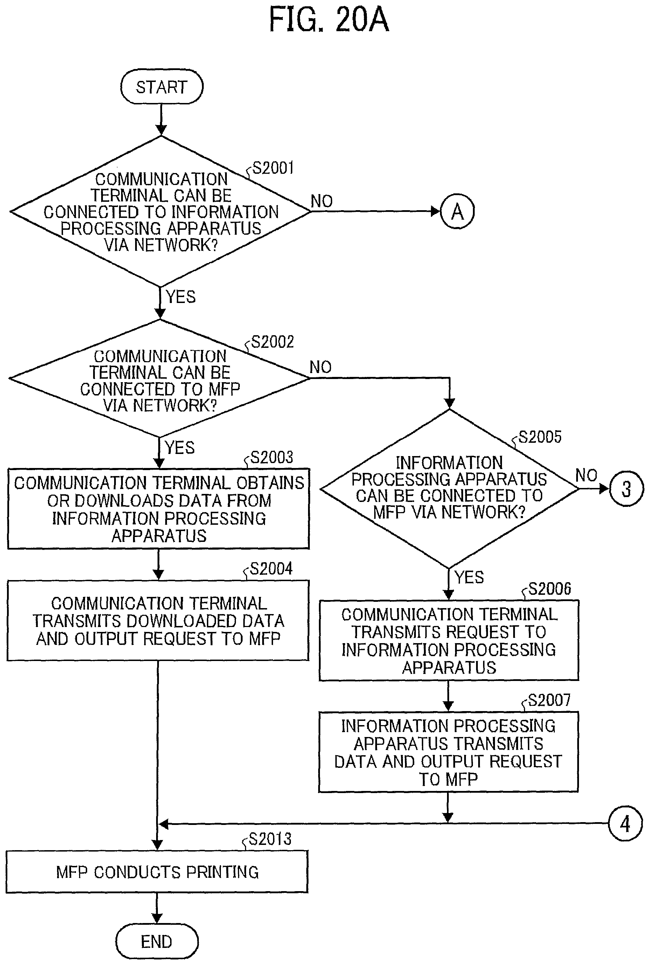

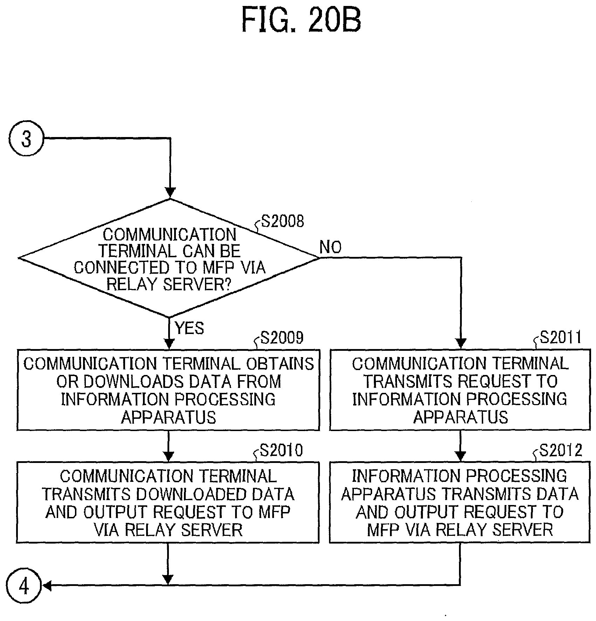

In the above description, various connection patterns depending on various connection configurations are described. Further, other connection patterns not described in the above can be devised. Hereinafter, a description is given of example of connection patterns with reference to FIGs. 20 to 28.

In an example case of FIGs. 20A and 20B, the process starts from step S2000. At first, at step S2001, it is determined whether the communication terminal 50 can be connected to the information processing apparatus 60 via a network. For example, when the communication terminal 50 and the information processing apparatus 60 are connected to the same network as above described, it can be determined that the communication terminal 50 can be connected to the information processing apparatus 60 via a network. In other configuration, it can be determined whether the communication terminal 50 can be connected to the information processing apparatus 60 by transmitting a connection request from the communication terminal 50 to the information processing apparatus 60.

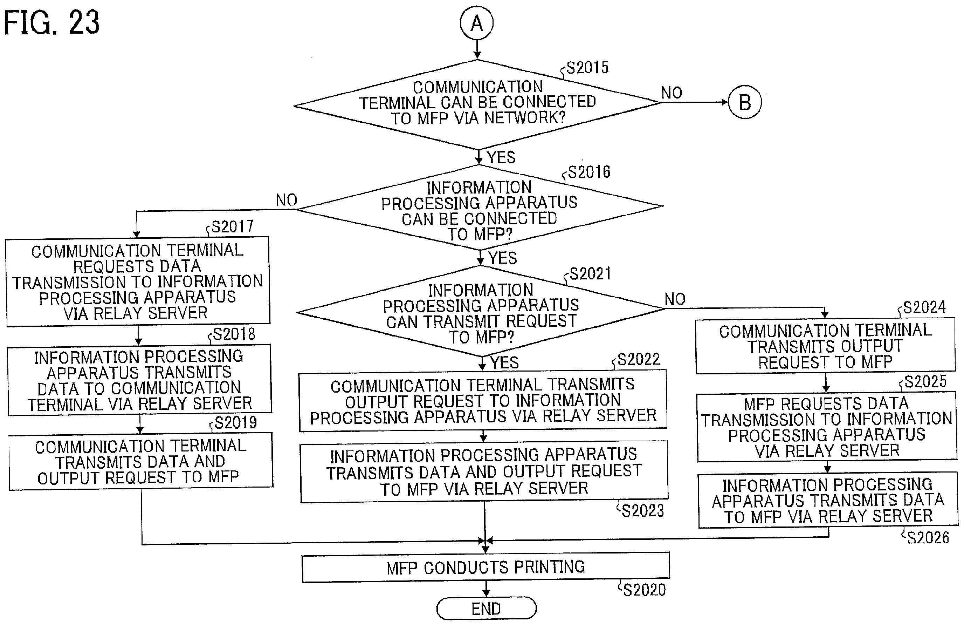

If it is determined that the communication terminal 50 can be connected to the information processing apparatus 60 via the network (S2001: Yes), the process proceeds to step S2002, and if it is determined that the communication terminal 50 cannot be connected to the information processing apparatus 60 via the network (S2001: No), the process proceeds to process illustrated in FIG. 23 indicated by an arrow A in FIG. 20A.

If it is determined that the communication terminal 50 can be connected to the information processing apparatus 60 via the network (step S2001: Yes), it is determined whether the communication terminal 50 can be connected to the MFP 70 via a network (step S2002). For example, similar to step S2001, when the communication terminal 50 and the MFP 70 are connected to the same network, it can be determined that the communication terminal 50 can be connected to the MFP 70. Further, if the communication terminal 50 can be connected to the MFP 70 using other network such as a near distance wireless communication (e.g., infrared, Bluetooth, Wi-Fi-direct), it can be determined that the communication terminal 50 can be connected to the MFP 70.

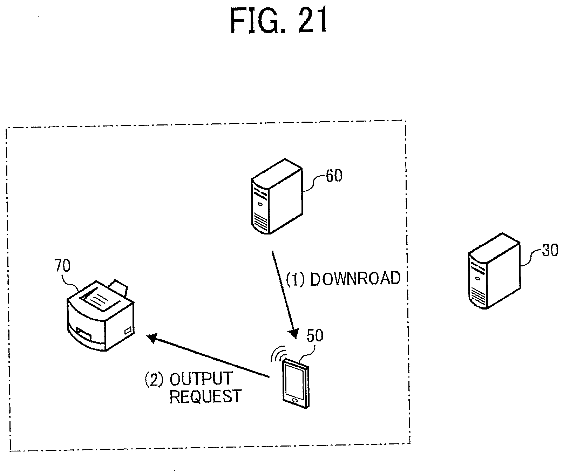

If it is determined that the communication terminal 50 can be connected to the MFP 70 via the network (step S2002: Yes), the information processing system conducts a target process by linking the apparatuses using a connection pattern illustrated in FIG. 21, in which the process of steps S2003 and S2004 illustrated in FIG. 20 is conducted. At step S2003, the communication terminal 50 obtains or downloads data selected by a user from the information processing apparatus 60. Then, at step S2004, the communication terminal 50 transmits the data obtained or downloaded from the information processing apparatus 60 to the MFP 70 with an output request. Then, at step 2013, the MFP 70 prints the received data based on an output condition included in the output request.

In this case, as described with reference to FIG. 10, a configuration to transmit the output request and data to the MFP 70 from the information processing apparatus 60 can be used. However, other configuration may be preferable if a to-be-executed target process is a projection processing by a projector. In a case of projection processing, it can be configured that data is obtained by the communication terminal 50, and the communication terminal 50 directly instructs an image projection to the projector based on the obtained data. In this connection pattern, a page feed instruction can be transmitted from the communication terminal 50 carried by a user to the projector, with which a user operation such as page feed can be quickly conducted compared to a configuration transmitting an instruction to the projector via the information processing apparatus 60 stepwisely.

If it is determined that the communication terminal 50 cannot be connected to the information processing apparatus 60 via a network (step S2002: No), at step S2005, it is determined whether the information processing apparatus 60 can be connected to the MFP 70 via a network. In this case, the network connection means a condition that the information processing apparatus 60 and the MFP 70 can directly communicate with each other. For example, the information processing apparatus 60 can store a list of apparatuses connectable to the information processing apparatus 60 or a list of apparatuses existing in the same network. In this case, the communication terminal 50 inquires the information processing apparatus 60 whether the information processing apparatus 60 can be connected to the MFP 70. Based on the inquiry from the communication terminal 50, the information processing apparatus 60 determines whether the MFP 70 exists in the above mentioned list, and transmits a result to the communication terminal 50. Then, the communication terminal 50 can determine whether the information processing apparatus 60 and the MFP 70 can be connected based on the inquiry result transmitted from the information processing apparatus 60.

Further, as to other method, the communication terminal 50 can transmit a "request of confirmation of connection with the MFP 70" to the information processing apparatus 60. Upon receiving the "request of confirmation of connection with the MFP 70," the information processing apparatus 60 conducts a confirmation process of connection to the MFP 70. For example, similar to the above described method, connectability can be determined based on whether the information processing apparatus 60 and the MFP 70 are connected to the same network, or connectability can be determined by transmitting a connection request to the MFP 70 and confirming the connection.

If it is determined that the information processing apparatus 60 can be connected to the MFP 70 via the network (step S2005: Yes), the information processing system conducts a target process by linking the apparatuses using the connection pattern illustrated in FIG. 11, in which the process of steps S2006 and S2007 illustrated in FIG. 20 is conducted. Because the process of steps S2006 and S2007 is same as the process of FIG. 11, the explanation of steps S2006 and S2007 is omitted.

If it is determined that the information processing apparatus 60 cannot be connected to the MFP 70 via the network (step S2005: No), at step S2008, it is determined whether the communication terminal 50 can be connected to the MFP 70 via the relay server 30. Connectability can be determined by transmitting a response request addressed to the MFP 70 to the relay server 30, and then by determining whether a response from the MFP 70 is received within a given time period.

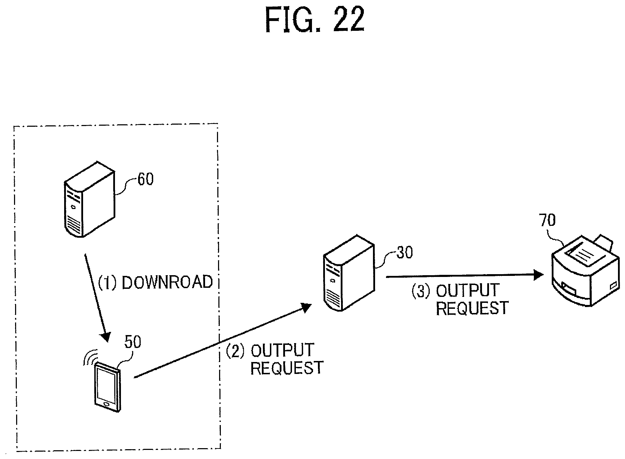

When the communication terminal 50 can be connected to the MFP 70 via the relay server 30 (step S2008: Yes), the information processing system conducts a target process by linking the apparatuses using a connection pattern illustrated in FIG. 22, in which the process of steps S2009 and S2010 illustrated in FIG. 20B is conducted. At step S2009, the communication terminal 50 obtains or downloads data selected by a user from the information processing apparatus 60. Then, at step S2010, the communication terminal 50 transmits the downloaded data and an output request of data to the relay server 30, and the MFP 70 obtains the output request and the data from the relay server 30, which has received the output request and the data from the communication terminal 50.

If the communication terminal 50 cannot be connected to the MFP 70 via the relay server 30 (step S2008: No), the information processing system conducts a target process by linking the apparatuses using the connection pattern illustrated in FIG. 18, in which the process of step S2011 and S2012 illustrated in FIG. 20 is conducted. Because the process of step S2011 and S2012 is same as the process of FIG. 18, the explanation of step S2011 and S2012 is omitted. Further, because the process of step S2013 is same as the process of step S1006 and S1012 illustrated in FIG. 10, the explanation of step S2013 is omitted.

With reference to FIG. 23, a description is given of a case if it is determined that the communication terminal 50 cannot be connected to the information processing apparatus 60 via the network (step S2001: No) in FIG. 20.

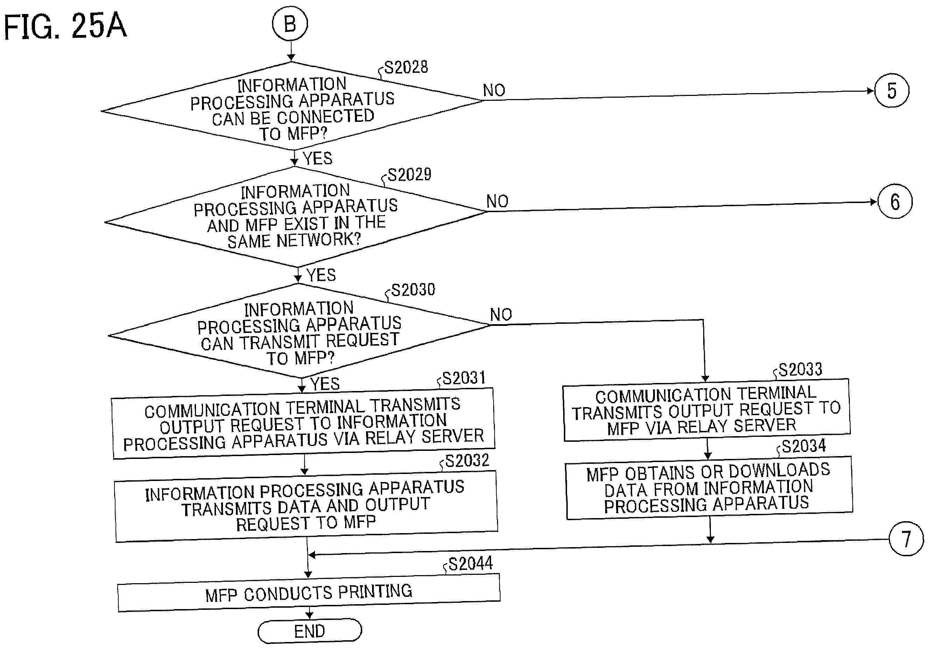

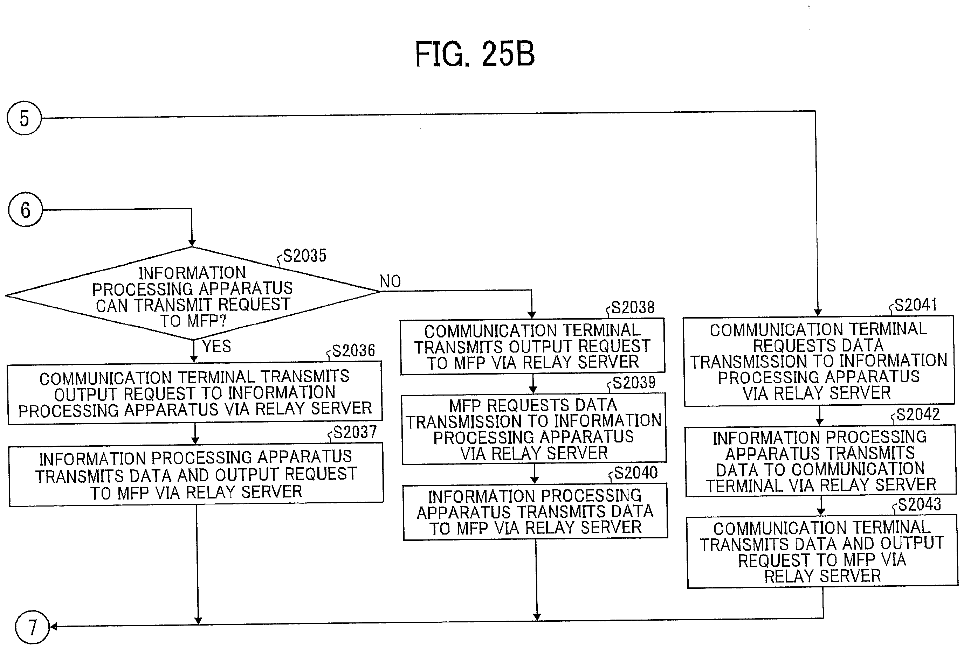

If it is determined that the communication terminal 50 cannot be connected to the information processing apparatus 60 via network (step S2001: No), at step S2015, it is determined whether the communication terminal 50 can be connected to the MFP 70 via a network. When the communication terminal 50 can be connected to the MFP 70 via the network (step S2015: Yes), the process proceeds to step S2016, and when the communication terminal 50 cannot be connected to the MFP 70 via the network (step S2015: No), the process proceeds to the process of FIG. 25 indicated by an arrow B in FIG. 23.

When the communication terminal 50 can be connected to the MFP 70 via the network (step S2015: Yes), at step S2016, it is determined whether the information processing apparatus 60 and the MFP 70 can be connected.

If it is determined that the information processing apparatus 60 and the MFP 70 cannot be connected (step S2016: No), the information processing system conducts a target process by linking the apparatuses using the connection pattern illustrated in FIG. 12 or FIG. 14, in which the process of steps S2017 to S2019 is conducted. Because the process of steps S2017 to S2019 is same as the process of FIG. 12 or FIG. 14, detail explanation of the steps S2017 to S2019 is omitted.

The information processing system can determine which one of the connection pattern of FIG. 12 and the connection pattern of FIG. 14 is employed based on a network type that the communication terminal 50 and the MFP 70 can be connected, which is determined at step S2015. For example, if it is determined that the communication terminal 50 can be connected to the MFP 70 by a near distance wireless communication at step S2015, the information processing system conducts a target process by linking the apparatuses using the connection pattern of FIG. 14. By contrast, if it is determined that the communication terminal 50 can be connected to the MFP 70 by the same network at step S2015, the information processing system conducts a target process by linking the apparatuses using the connection pattern of FIG. 12.

When the information processing apparatus 60 and the MFP 70 can be connected (step S2016: Yes), at step S2021, it is determined whether the information processing apparatus 60 can transmit a request to the MFP 70. For example, the communication terminal 50 inquires the information processing apparatus 60 whether "transmission of request to the MFP 70 is possible," and the information processing apparatus 60 returns a response of transmission possible or a response of transmission impossible, and based on the response, it can determine whether the information processing apparatus 60 can transmit a request to the MFP 70.

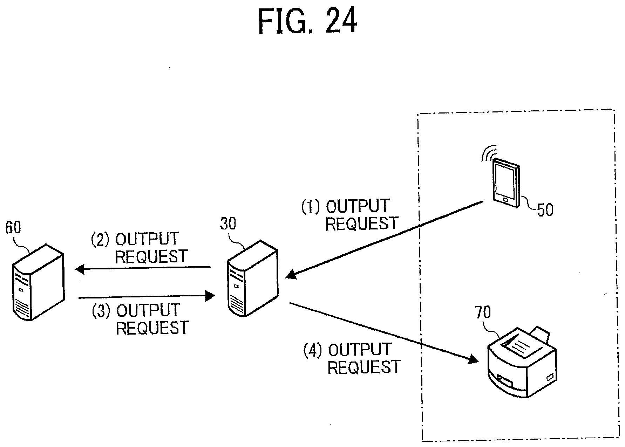

When the information processing apparatus 60 can transmit a request to the MFP 70 (step S2021: Yes), the information processing system conducts a target process by linking the apparatuses using a connection pattern of FIG. 24, in which the process of steps S2022 and S2023 illustrated in FIG. 23 is conducted. At step S2022, the communication terminal 50 transmits information for identifying to-be-output data (e.g., identification information of electronic data), and an output request including an output condition to the information processing apparatus 60 via the relay server 30. Then, at step S2023, the information processing apparatus 60 obtains data based on the information for identifying the to-be-output data, received from the communication terminal 50, and then the information processing apparatus 60 transmits the obtained data and the output request to the MFP 70 via the relay server 30.

By contrast, when the information processing apparatus 60 cannot transmit a request to the MFP 70 (step S2021: No), the information processing system conducts a target process by linking the apparatuses using a connection pattern of FIG. 16, in which the process of steps S2024 to S2026 illustrated in FIG. 23 is conducted. Because the process of steps S2024 to S2026 is same as the process of FIG. 16, the explanation of steps S2024 to S2026 is omitted.

In this example configuration, it is determined whether the information processing apparatus 60 and the MFP 70 can be connected at step S2016, but the process can be conducted differently. For example, if step S2015 is "Yes," the process of step S2017 can be conducted by omitting the determination at step S2016. By not conducting step S2016, a process of connection confirmation via the relay server 30 is not required, with which time to print execution can be shortened. Because the process of step S2020 is same as the process of steps S1006 and S1012 illustrated in FIG. 10, the explanation of step S2020 is omitted.

A description is given of when step S2015 is "No" (FIG. 23) with reference to FIGs. 25A and 25B. When the communication terminal 50 cannot be connected to the MFP 70 via the network (step S2015: No), at step S2028, the communication terminal 50 determines whether the information processing apparatus 60 can be connected to the MFP 70. When the information processing apparatus 60 can be connected to the MFP 70 (step S2028: Yes), the process proceeds to step 2029, and when the information processing apparatus 60 cannot be connected to the MFP 70 (step S2028: No), the process proceeds to step S2041.

At step S2029, the communication terminal 50 determines whether the information processing apparatus 60 and the MFP 70 exist in the same network. When the information processing apparatus 60 and the MFP 70 exist in the same network, the process proceeds to step S2030, and when the information processing apparatus 60 and the MFP 70 do not exist in the same network, the process proceeds to step S2035.

At step S2030, the communication terminal 50 determines whether the information processing apparatus 60 can transmit a request to the MFP 70. When the information processing apparatus 60 can transmit a request to the MFP 70 (step S2030: Yes), the process proceeds to step S2031, and the information processing system conducts a target process by linking the apparatuses using the connection pattern illustrated in FIG. 13, in which the process of steps S2031 and S2032 is conducted. Because the process of steps S2031 and S2032 is same as the process of FIG. 13, the explanation of steps S2031 and S2032 is omitted.

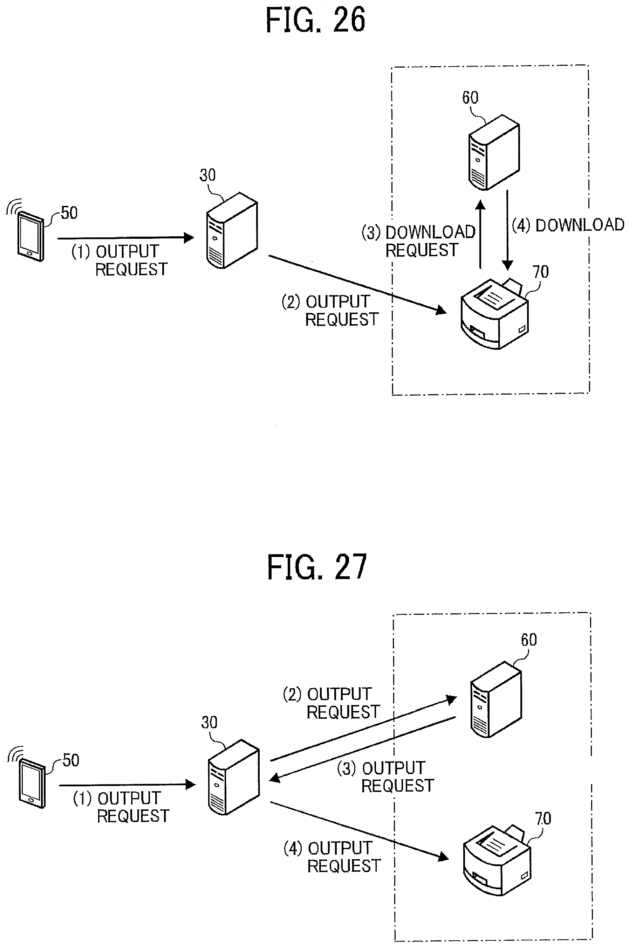

When the communication terminal 50 determines that the information processing apparatus 60 cannot transmit a request to the MFP 70 (step S2030: No), the information processing system conducts a target process by linking the apparatuses using the connection pattern illustrated in FIG. 26, in which the process of S2033 and S2034 illustrated in FIG. 25A is conducted. Specifically, at step S2033, the communication terminal 50 transmits an output request, and information for identifying data stored in the information processing apparatus 60 to the MFP 70 via the relay server 30. Upon receiving the output request and the information for identifying data stored in the information processing apparatus 60 from the relay server 30, at step S2034, the MFP 70 downloads the data stored in the information processing apparatus 60.

When the communication terminal 50 determines that the information processing apparatus 60 and the MFP 70 do not exist in the same network (step S2029: No), at step S2035, the communication terminal 50 determines whether the information processing apparatus 60 can transmit a request to the MFP 70.

When the communication terminal 50 determines that the information processing apparatus 60 can transmit a request to the MFP 70 (step S2035: Yes), the information processing system can conduct a target process by linking the apparatuses using a connection pattern illustrated in FIG. 27, in which the process of steps S2036 and S2037 illustrated in FIG. 25B is conducted. Specifically, at step S2036, the communication terminal 50 transmits an output request, and information for identifying data stored in the information processing apparatus 60 to the information processing apparatus 60 via the relay server 30. Upon receiving the output request and the information for identifying data stored in the information processing apparatus 60 from the relay server 30, at step S2037, the information processing apparatus 60 transmits the data stored in the information processing apparatus 60 and the output request of data to the MFP 70 via the relay server 30.

When the communication terminal 50 determines that the information processing apparatus 60 cannot transmit a request to the MFP 70 (step S2035: No), the information processing system conducts a target process by linking the apparatuses using the connection pattern illustrated in FIG. 15, in which the process of steps S2038 to S2040 illustrated in FIG. 25B is conducted. Because the process of steps S2038 to S2040 is same as the process of FIG. 15, the explanation of steps S2038 to S2040 is omitted.

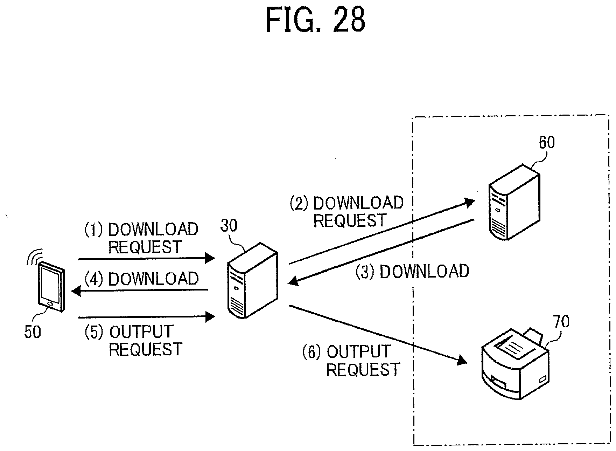

When the communication terminal 50 determines that the information processing apparatus 60 cannot be connected to the MFP 70 (step S2028: No), the information processing system conducts a target process by linking the apparatus using a connection pattern illustrated in FIG. 28, in which the process of steps S2041 to S2043 illustrated in FIG. 25B is conducted. Specifically, at step S2041, the communication terminal 50 transmits a download request of data (or obtaining request of data) to the information processing apparatus 60 via the relay server 30. Upon obtaining the download request from the relay server 30, at step S2042, the information processing apparatus 60 transmits data identified by the download request to the communication terminal 50 via the relay server 30. Upon obtaining the data transmitted from the information processing apparatus 60 via the relay server 30, at step S2043, the communication terminal 50 transmits the obtained data, and an output request of data to the MFP 70 via the relay server 30. Because the process of step S2044 is same as the process of step S1006 and S1012 illustrated in FIG. 10, the explanation of step S2044 is omitted.

In the above described example embodiments, various connection patterns, which can be changed depending on each apparatus used for the information processing system and connection status of each of the apparatuses connected to the information processing system, are described, but not limited hereto.

A linking method can be changed depending on a target process to be conducted by the information processing system. For example, as above described, a printing process based on a print request to a MFP can be completed by transmitting data and an output request for one time. By contrast, as to a projection instruction transmitted to a projector, the projector may receive an output request of page feed instruction from a user that operates a communication terminal after projecting data.

Therefore, when step S2002 is "Yes" in FIG. 20, and if a target process is a process of transmitting an output request of projecting image and transmitting an instruction from a communication terminal 50, the connection pattern of FIG. 21 can be employed. Further, when step S2002 is "Yes" in FIG. 20, and if a target process is a process of transmitting an one-time output request such as a print instruction to a MFP, the connection pattern of FIG. 11 can be employed. Although the process of FIG. 20 is explained as an example, other connection pattern can be used similar way.

In the above described configuration, a plurality of apparatuses (e.g., two apparatuses) such as the information processing apparatus 60 and the MFP 70 are used, and data stored in the information processing apparatus 60 is print output by using the MFP 70. As above described, by automatically switching an output destination of request, even if the two apparatuses and the communication terminal 50 exist on different network environments, a user can use a target function quickly. Further, because it can automatically switch to a suitable output destination of request, communication cost can be reduced.

As to the present invention, apparatus and function is not limited to the above described two apparatuses and function, but other apparatus and function, and three or more apparatuses can be used. In the above description, the output destination switching unit 53 downloads data via the communication unit 55, and outputs the downloaded data to the MFP 70 with a request, but not limited hereto. For example, the communication unit 55 alone can download and output. Further, a download unit and an output unit can be disposed separately.

In the above described example embodiments, a linking method is determined based on a condition whether a network connection can be conducted but not limited hereto. For example, a linking method can be changed based on version information of software installed in each apparatus or device. For example, if version information of application installed in the communication terminal 50 does not match version information of program installed in an output apparatus, it is determined that the communication terminal 50 and the output apparatus cannot communicate directly, and then the communication terminal 50 can instruct the information processing apparatus 60 to transmit an execution request to the output apparatus.

As to the above described example embodiments, even if a plurality of apparatuses exist on different network environments, an output destination of request can be switched automatically and effectively, and a designated or target process can be conducted effectively, with which a user can use the designated or target function easily.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium. The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

The hardware platform includes any desired kind of hardware resources including, for example, a central processing unit (CPU), a random access memory (RAM), and a hard disk drive (HDD). The CPU may be implemented by any desired kind of any desired number of processor. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside of the apparatus as long as the HDD is accessible. In this example, the CPU, such as a cache memory of the CPU, and the RAM may function as a physical memory or a primary memory of the apparatus, while the HDD may function as a secondary memory of the apparatus.

Numerous additional modifications and variations for the communication terminal, information processing system, and information processing method, a program to execute the information processing method by a computer, and a storage or carrier medium of the program are possible in light of the above teachings. It is therefore to be understood that within the scope of the appended claims, the disclosure of the present invention may be practiced otherwise than as specifically described herein.

## Claims

1. A communication terminal (50) comprising:
a receiving unit (43) configured to receive an input of an execution instruction that instructs execution of an outputting process for outputting electronic data stored in an information processing apparatus (60) by using an output apparatus (70);
an obtaining unit (51) configured to obtain a connection status of each of the communication terminal (50), the information processing apparatus (60), and the output apparatus (70) in response to receiving the input of the execution instruction, wherein obtaining a connection status of the communication terminal (50) comprises:
determining if the communication terminal (50) can be connected to a network using a LAN connection, and if yes, transmitting an inquiry packet to the network connected by the LAN connection, and
if a response to the inquiry packet is received from the information processing apparatus (60) and the output apparatus (70) within a predetermined time period, determining that the communication terminal, the information processing apparatus, and the output apparatus are connected to the same network;
if no response to the inquiry packet is received from the information processing apparatus (60) and/or the output apparatus (70) within a predetermined time period, determining that the information processing apparatus and/or the output apparatus, respectively, are connected to one or more networks different from the network to which the communication terminal is connected;
the communication terminal further comprising:
a determination unit (53) to determine a transmission destination of an execution request to be performed to execute the outputting process instructed by the execution instruction, depending on the connection status of each of the communication terminal (50), the information processing apparatus (60), and the output apparatus (70) that are obtained by the obtaining unit (51); and
a generating unit (52) configured to generate the execution request based on the transmission destination determined by the determination unit (53),
wherein
if the transmission destination determined by the determination unit (53) is the information processing apparatus (60), the execution request includes a first execution request including information that identifies the electronic data, and information that identifies the output apparatus (70),
if the transmission destination determined by the determination unit (53) is the output apparatus (70), the execution request includes a second execution request including information that identifies the electronic data, and information that identifies the information processing apparatus (60),
if the transmission destination determined by the determination unit (53) is the information processing apparatus (60) and the output apparatus (70), the execution request includes a third execution request to be transmitted to the information processing apparatus (60), the third execution request including an obtaining request for obtaining the electronic data, and a fourth execution request to be transmitted to the output apparatus (70), the fourth execution request including the electronic data and an output request for outputting the electronic data, wherein
if the information processing apparatus (60) is provided on a network different from the network to which the communication terminal is connected, the third execution request generated by the generating unit (52) is sent via a relay apparatus and further includes information for identifying the information processing apparatus (60), and the communication terminal is configured to download the electronic data from the relay apparatus, and
if the output apparatus (70) is provided on a network different from the network to which the communication terminal is connected, the fourth execution request is sent via the relay apparatus and further includes information for identifying the output apparatus (70); and
the communication terminal further comprising a transmission unit (52) configured to transmit at least one of the first, the second, the third, and the fourth execution requests, generated by the generating unit (52), to the transmission destination determined by the determination unit (53).

2. The communication terminal (50) of claim 1, wherein if the transmission destination determined by the determination unit (53) is the information processing apparatus (60), and the determination unit (53) determines to transmit the execution request to the information processing apparatus (60) provided on a different network via a relay apparatus (30), the first execution request to be transmitted to the information processing apparatus (60), generated by the generating unit (52), further includes information for identifying the information processing apparatus (60).

3. The communication terminal (50) of claim 1, wherein if the transmission destination determined by the determination unit (53) is the output apparatus (70), and the determination unit (53) determines to transmit the execution request to the output apparatus (70) provided on a different network via a relay apparatus (30), the second execution request to be transmitted to the output apparatus (70), generated by the generating unit (52), further includes information for identifying the output apparatus (70).

4. The communication terminal (50) of claim 1, wherein if a direct communication is established between the communication terminal (50), the information processing apparatus (60), and the output apparatus (70), the determination unit (53) determines the information processing apparatus (60) to be the transmission destination.

5. The communication terminal (50) of claim 1, wherein if a direct communication is established between the communication terminal (50) and the information processing apparatus (60), a direct communication is not established between the communication terminal (50) and the output apparatus (70), and a direct communication is established between the information processing apparatus (60) and the output apparatus (70), the determination unit (53) determines the information processing apparatus (60) to be the transmission destination.

6. The communication terminal (50) of claim 1, wherein if a direct communication is established between the communication terminal (50) and the information processing apparatus (60), a direct communication is not established between the information processing apparatus (60) and the output apparatus (70), a direct communication is not established between the communication terminal (50) and the output apparatus (70), and the communication terminal (50) is connected to the output apparatus (70) indirectly via the relay apparatus (30), the determination unit (53) determines the information processing apparatus (60) and the output apparatus (70) to be the transmission destination, and determines to transmit the execution request to the output apparatus (70) via the relay apparatus (30).

7. The communication terminal (50) of claim 1, wherein if a direct communication is established between the communication terminal (50) and the information processing apparatus (60), a direct communication is not established between the communication terminal (50) and the information processing apparatus (60), on the one hand, and the output apparatus (70), on the other hand; and the communication terminal (50) is not communicable with the output apparatus (70) via a relay apparatus (30), the determination unit (53) determines the information processing apparatus (60) to be the transmission destination.

8. The communication terminal (50) of claim 1, wherein if a direct communication is not established between the communication terminal (50) and the information processing apparatus (60), a direct communication is established between the communication terminal (50) and the output apparatus (70), and a direct communication is not established between the information processing apparatus (60) and the output apparatus (70), the determination unit (53) determines the information processing apparatus (60) and the output apparatus (70) to be the transmission destination.

9. The communication terminal (50) of claim 2, wherein if a direct communication is not established between the communication terminal (50) and the information processing apparatus (60), a direct communication is established between the communication terminal (50) and the output apparatus (70), and the information processing apparatus (60) is capable of transmitting the execution request to the output apparatus (70) by establishing connection between the information processing apparatus (60) and the output apparatus (70), the determination unit (53) determines the information processing apparatus (60) to be the transmission destination, and determines to transmit the execution request to the information processing apparatus (60) via the relay apparatus (30).

10. The communication terminal (50) of claim 1, wherein if a direct communication is not established between the communication terminal (50) and the information processing apparatus (60), a direct communication is established between the communication terminal (50) and the output apparatus (70), and the information processing apparatus (60) is not capable of establishing connection with the output apparatus (70) to transmit the execution request to the output apparatus (70), the determination unit (53) determines the output apparatus (70) to be the transmission destination.

11. The communication terminal (50) of claim 1, wherein the determination unit (53) determines an execution request for the outputting process, and a transmission destination of the execution request depending on the connection status obtained by the obtaining unit (51) and a type of the outputting process.

12. The communication terminal (50) of claim 1, wherein the determination unit (53) determines an execution request for the outputting process, and a transmission destination of the execution request depending on the connection status obtained by the obtaining unit (51) and a type of the output apparatus (70).

13. A method of information processing using a communication terminal (50), the method comprising the steps of:
receiving an input of an execution instruction that instructs execution of an outputting process for outputting electronic data stored in an information processing apparatus (60) by using an output apparatus (70);
obtaining a connection status of each of the communication terminal (50), the information processing apparatus (60), and the output apparatus (70) in response to receiving the input of the execution instruction, wherein obtaining a connection status of the communication terminal (50) comprises:
determining if the communication terminal (50) can be connected to a network using a LAN connection, and if yes, transmitting an inquiry packet to the network connected by the LAN connection, and
if a response to the inquiry packet is received from the information processing apparatus (60) and the output apparatus (70) within a predetermined time period, determining that the communication terminal, the information processing apparatus, and the output apparatus are connected to the same network;
if no response to the inquiry packet is received from the information processing apparatus (60) and/or the output apparatus (70) within a predetermined time period, determining that the information processing apparatus and/or the output apparatus, respectively, are connected to one or more networks different from the network to which the communication terminal is connected;
determining a transmission destination of an execution request to be performed to execute the outputting process instructed by the execution instruction, depending on the obtained connection status of each of the communication terminal (50), the information processing apparatus (60), and the output apparatus (70);
generating the execution request based on the determined transmission destination,
wherein
if the determined transmission destination is the information processing apparatus (60), the execution request includes a first execution request including information that identifies the electronic data, and information that identifies the output apparatus (70),
if the determined transmission destination is the output apparatus (70), the execution request includes a second execution request including information that identifies the electronic data, and information that identifies the information processing apparatus (60),
if the determined transmission destination is the information processing apparatus (60) and the output apparatus (70), the execution request includes a third execution request to be transmitted to the information processing apparatus (60), the third execution request including an obtaining request for obtaining the electronic data, and a fourth execution request to be transmitted to the output apparatus (70), the fourth execution request including the electronic data and an output request for outputting the electronic data, wherein
if the information processing apparatus (60) is provided on a network different from the network to which the communication terminal is connected, the third execution request generated by the generating unit (52) is sent via a relay apparatus and further includes information for identifying the information processing apparatus (60), and the communication terminal downloads the electronic data from the relay apparatus, and
if the output apparatus (70) is provided on a network different from the network to which the communication terminal is connected, the fourth execution request is sent via the relay apparatus and further includes information for identifying the output apparatus (70); and
transmitting at least one of the generated first, the second, the third, and the fourth execution requests, to the determined transmission destination.

14. A carrier means carrying computer readable code which, when executed by computing means of a communication terminal, cause the communication terminal to carry out the method of claim 13.

## Patentansprüche

1. Kommunikationsendgerät (50), umfassend:
eine Empfangseinheit (43), die konfiguriert ist, um eine Eingabe einer Ausführungsanweisung zu empfangen, die die Ausführung eines Ausgabevorgangs zum Ausgeben von in einer Informationsverarbeitungsvorrichtung (60) gespeicherten elektronischen Daten unter Verwendung einer Ausgabevorrichtung (70) anweist;
eine Erlangungseinheit (51), die konfiguriert ist, um in Reaktion auf das Empfangen der Eingabe der Ausführungsanweisung einen Verbindungsstatus von jedem von dem Kommunikationsendgerät (50), der Informationsverarbeitungsvorrichtung (60) und der Ausgabevorrichtung (70) zu erlangen, wobei das Erlangen eines Verbindungsstatus des Kommunikationsendgeräts (50) umfasst:
Bestimmen, ob das Kommunikationsendgerät (50) mit unter Verwendung einer LAN-Verbindung mit einem Netzwerk verbunden werden kann, und wenn ja, Übertragen eines Anfragepakets an das durch die LAN-Verbindung verbundene Netzwerk, und
wenn innerhalb einer vorgegebenen Zeitdauer eine Antwort auf das Anfragepaket von der Informationsverarbeitungsvorrichtung (60) und der Ausgabevorrichtung (70) empfangen wird, Bestimmen, dass das Kommunikationsendgerät, die Informationsverarbeitungsvorrichtung und die Ausgabevorrichtung mit dem gleichen Netzwerk verbunden sind;
wenn innerhalb einer vorgegebenen Zeitdauer keine Antwort auf das Abfragepaket von der Informationsverarbeitungsvorrichtung (60) und/oder der Ausgabevorrichtung (70) empfangen wird, Bestimmen, dass die Informationsverarbeitungsvorrichtung und/oder die Ausgabevorrichtung jeweils mit einem oder mehreren Netzwerken verbunden sind, die sich von dem Netzwerk unterscheiden, mit dem das Kommunikationsendgerät verbunden ist;
wobei das Kommunikationsendgerät ferner umfasst:
eine Bestimmungseinheit (53), um abhängig von dem Verbindungsstatus von jedem von dem Kommunikationsendgerät (50), der Informationsverarbeitungsvorrichtung (60) und der Ausgabevorrichtung (70), der durch die Erlangungseinheit (51) erlangt wird, ein Übertragungsziel einer Ausführungsanforderung zu bestimmen, die durchzuführen ist, um den durch die Ausführungsanweisung angewiesenen Ausgabevorgang auszuführen; und
eine Erzeugungseinheit (52), die konfiguriert ist, um die Ausführungsanforderung basierend auf dem durch die Bestimmungseinheit (53) bestimmten Übertragungsziel zu erzeugen;
wobei
wenn das durch die Bestimmungseinheit (53) bestimmte Übertragungsziel die Informationsverarbeitungsvorrichtung (60) ist, die Ausführungsanforderung eine erste Ausführungsanforderung einschließt, die die elektronischen Daten identifizierende Informationen und die Ausgabevorrichtung (70) identifizierende Informationen einschließt,
wenn das durch die Bestimmungseinheit (53) bestimmte Übertragungsziel die Ausgabevorrichtung (70) ist, die Ausführungsanforderung eine zweite Ausführungsanforderung einschließt, die die elektronischen Daten identifizierende Informationen und die Informationsverarbeitungsvorrichtung (60) identifizierende Informationen einschließt,
wenn das durch die Bestimmungseinheit (53) bestimmte Übertragungsziel die Informationsverarbeitungsvorrichtung (60) und die Ausgabevorrichtung (70) ist, die Ausführungsanforderung eine dritte Ausführungsanforderung zur Übertragung an die Informationsverarbeitungsvorrichtung (60) einschließt, wobei die dritte Ausführungsanforderung eine Erlangungsanforderung zum Erlangen der elektronischen Daten einschließt, und eine vierte Ausführungsanforderung zur Übertragung an die Ausgabevorrichtung (70) einschließt, wobei die vierte Ausführungsanforderung die elektronischen Daten und eine Ausgabeanforderung zum Ausgeben der elektronischen Daten einschließt, wobei
wenn die Informationsverarbeitungsvorrichtung (60) in einem anderen Netzwerk als dem Netzwerk vorgesehen ist, mit dem das Kommunikationsendgerät verbunden ist, die durch die Erzeugungseinheit (52) erzeugte dritte Ausführungsanforderung über eine Relaisvorrichtung gesendet wird und ferner Informationen zum Identifizieren der Informationsverarbeitungsvorrichtung (60) einschließt, und das Kommunikationsendgerät konfiguriert ist, um die elektronischen Daten von der Relaisvorrichtung herunterzuladen, und
wenn die Ausgabevorrichtung (70) in einem anderen Netzwerk als das Netzwerk vorgesehen ist, mit dem das Kommunikationsendgerät verbunden ist, die vierte Ausführungsanforderung über die Relaisvorrichtung gesendet wird und ferner Informationen zum Identifizieren der Ausgabevorrichtung (70) einschließt; und
das Kommunikationsendgerät ferner eine Übertragungseinheit (52) umfasst, die konfiguriert ist, um mindestens eine von der ersten, zweiten, dritten und vierten Ausführungsanforderung, die durch die Erzeugungseinheit (52) erzeugt wird, an das durch die Bestimmungseinheit (53) bestimmte Übertragungsziel zu übertragen.

2. Kommunikationsendgerät (50) nach Anspruch 1, wobei, wenn das durch die Bestimmungseinheit (53) bestimmte Übertragungsziel die Informationsverarbeitungsvorrichtung (60) ist und die die Bestimmungseinheit (53) bestimmt, die Ausführungsanforderung über eine Relaisvorrichtung (30) an die in einem anderen Netzwerk vorgesehene Informationsverarbeitungsvorrichtung (60) zu übertragen, die erste an die Informationsverarbeitungsvorrichtung (60) zu übertragende Ausführungsanforderung, die durch die Erzeugungseinheit (52) erzeugt wird, ferner Informationen zum Identifizieren der Informationsverarbeitungsvorrichtung (60) einschließt.

3. Kommunikationsendgerät (50) nach Anspruch 1, wobei, wenn das durch die Bestimmungseinheit (53) bestimmte Übertragungsziel die Ausgabevorrichtung (70) ist und die Bestimmungseinheit (53) bestimmt, die Ausführungsanforderung über eine Relaisvorrichtung (30) an die in einem anderen Netzwerk vorgesehene Ausgabevorrichtung (70) zu übertragen, die zweite an die Ausgabevorrichtung (70) zu übertragende Ausführungsanforderung, die durch die Erzeugungseinheit (52) erzeugt wird, ferner Informationen zum Identifizieren der Ausgabevorrichtung (70) einschließt.

4. Kommunikationsendgerät (50) nach Anspruch 1, wobei, wenn eine direkte Kommunikation zwischen dem Kommunikationsendgerät (50), der Informationsverarbeitungsvorrichtung (60) und der Ausgabevorrichtung (70) hergestellt wird, die Bestimmungseinheit (53) die Informationsverarbeitungsvorrichtung (60) als das Übertragungsziel bestimmt.

5. Kommunikationsendgerät (50) nach Anspruch 1, wobei, wenn eine direkte Kommunikation zwischen dem Kommunikationsendgerät (50) und der Informationsverarbeitungsvorrichtung (60) hergestellt wird, keine direkte Kommunikation zwischen dem Kommunikationsendgerät (50) und der Ausgabevorrichtung (70) hergestellt wird und eine direkte Kommunikation zwischen der Informationsverarbeitungsvorrichtung (60) und der Ausgabevorrichtung (70) hergestellt wird, die Bestimmungseinheit (53) die Informationsverarbeitungsvorrichtung (60) als das Übertragungsziel bestimmt.

6. Kommunikationsendgerät (50) nach Anspruch 1, wobei, wenn eine direkte Kommunikation zwischen dem Kommunikationsendgerät (50) und der Informationsverarbeitungsvorrichtung (60) hergestellt wird, keine direkte Kommunikation zwischen der Informationsverarbeitungsvorrichtung (60) und der Ausgabevorrichtung (70) hergestellt wird, keine direkte Kommunikation zwischen dem Kommunikationsendgerät (50) und der Ausgabevorrichtung (70) hergestellt wird und das Kommunikationsendgerät (50) indirekt über die Relaisvorrichtung (30) mit der Ausgabevorrichtung (70) verbunden wird, die Bestimmungseinheit (53) die Informationsverarbeitungsvorrichtung (60) und die Ausgabevorrichtung (70) als das Übertragungsziel bestimmt und die Übertragung der Ausführungsanforderung an die Ausgabevorrichtung (70) über die Relaisvorrichtung (30) bestimmt.

7. Kommunikationsendgerät (50) nach Anspruch 1, wobei, wenn eine direkte Kommunikation zwischen dem Kommunikationsendgerät (50) und der Informationsverarbeitungsvorrichtung (60) hergestellt wird, keine direkte Kommunikation zwischen dem Kommunikationsendgerät (50) und der Informationsverarbeitungsvorrichtung (60) auf der einen Seite und der Ausgabevorrichtung (70) auf der anderen Seite hergestellt wird; und das Kommunikationsendgerät (50) nicht über eine Relaisvorrichtung (30) mit der Ausgabevorrichtung 70) kommunizieren kann, die Bestimmungseinheit (53) die Informationsverarbeitungsvorrichtung (60) als das Übertragungsziel bestimmt.

8. Kommunikationsendgerät (50) nach Anspruch 1, wobei, wenn keine direkte Kommunikation zwischen dem Kommunikationsendgerät (50) und der Informationsverarbeitungsvorrichtung (60) hergestellt wird, eine direkte Kommunikation zwischen dem Kommunikationsendgerät (50) und der Ausgabevorrichtung (70) hergestellt wird und keine direkte Kommunikation zwischen der Informationsverarbeitungsvorrichtung (60) und der Ausgabevorrichtung (70) hergestellt wird, die Bestimmungseinheit (53) die Informationsverarbeitungsvorrichtung (60) und die Ausgabevorrichtung (70) als das Übertragungsziel bestimmt.

9. Kommunikationsendgerät (50) nach Anspruch 2, wobei, wenn keine direkte Kommunikation zwischen dem Kommunikationsendgerät (50) und der Informationsverarbeitungsvorrichtung (60) hergestellt wird, eine direkte Kommunikation zwischen dem Kommunikationsendgerät (50) und der Ausgabevorrichtung (70) hergestellt wird und die Informationsverarbeitungsvorrichtung (60) in der Lage ist, die Ausführungsanforderung an die Ausgabevorrichtung (70) zu übertragen, indem eine Verbindung zwischen der Informationsverarbeitungsvorrichtung (60) und der Ausgabevorrichtung (70) hergestellt wird, die Bestimmungseinheit (53) die Informationsverarbeitungsvorrichtung (60) als das Übertragungsziel bestimmt und die Übertragung der Ausführungsanforderung an die Informationsverarbeitungsvorrichtung (60) über die Relaisvorrichtung (30) bestimmt.

10. Kommunikationsendgerät (50) nach Anspruch 1, wobei, wenn keine direkte Kommunikation zwischen dem Kommunikationsendgerät (50) und der Informationsverarbeitungsvorrichtung (60) hergestellt wird, eine direkte Kommunikation zwischen dem Kommunikationsendgerät (50) und der Ausgabevorrichtung (70) hergestellt wird und die Informationsverarbeitungsvorrichtung (60) nicht in der Lage ist, eine Verbindung mit der Ausgabevorrichtung (70) herzustellen, um die Ausführungsanforderung an die Ausgabevorrichtung (70) zu überragen, die Bestimmungseinheit (53) die Ausgabevorrichtung (70) als das Übertragungsziel bestimmt.

11. Kommunikationsendgerät (50) nach Anspruch 1, wobei die Bestimmungseinheit (53) eine Ausführungsanforderung für den Ausgabevorgang und ein Übertragungsziel der Ausführungsanforderung in Abhängigkeit von dem durch die Erlangungseinheit (51) erlangten Verbindungsstatus und einer Art des Ausgabevorgangs bestimmt.

12. Kommunikationsendgerät (50) nach Anspruch 1, wobei die Bestimmungseinheit (53) eine Ausführungsanforderung für den Ausgabevorgang und ein Übertragungsziel der Ausführungsanforderung in Abhängigkeit von dem durch die Erlangungseinheit (51) erlangten Verbindungsstatus und einer Art der Ausgabevorrichtung (70) bestimmt.

13. Verfahren zur Informationsverarbeitung unter Verwendung eines Kommunikationsendgeräts (50), wobei das Verfahren die folgenden Schritte umfasst:
Empfangen einer Eingabe einer Ausführungsanweisung, die die Ausführung eines Ausgabevorgangs zum Ausgeben von in einer Informationsverarbeitungsvorrichtung (60) gespeicherten elektronischen Daten unter Verwendung einer Ausgabevorrichtung (70) anweist;
Erlangen eines Verbindungsstatus von jedem von dem Kommunikationsendgerät (50), der Informationsverarbeitungsvorrichtung (60) und der Ausgabevorrichtung (70) in Reaktion auf das Empfangen der Eingabe der Ausführungsanweisung, wobei das Erlangen eines Verbindungsstatus des Kommunikationsendgeräts (50) umfasst:
Bestimmen, ob das Kommunikationsendgerät (50) unter Verwendung einer LAN-Verbindung mit einem Netzwerk verbunden werden kann, und wenn ja, Übertragen eines Anfragepakets an das durch die LAN-Verbindung verbundene Netzwerk, und
wenn innerhalb einer vorgegebenen Zeitdauer eine Antwort auf das Anfragepaket von der Informationsverarbeitungsvorrichtung (60) und der Ausgabevorrichtung (70) empfangen wird, Bestimmen, dass das Kommunikationsendgerät, die Informationsverarbeitungsvorrichtung und die Ausgabevorrichtung mit dem gleichen Netzwerk verbunden sind;
wenn innerhalb einer vorgegebenen Zeitdauer keine Antwort auf das Abfragepaket von der Informationsverarbeitungsvorrichtung (60) und/oder der Ausgabevorrichtung (70) empfangen wird, Bestimmen, dass die Informationsverarbeitungsvorrichtung und/oder die Ausgabevorrichtung jeweils mit einem oder mehreren Netzwerken verbunden sind, die sich von dem Netzwerk unterscheiden, mit dem das Kommunikationsendgerät verbunden ist;
Bestimmen eines Übertragungsziels einer Ausführungsanforderung, die durchzuführen ist, um den durch die Ausführungsanweisung angewiesenen Ausgabevorgang auszuführen, abhängig von dem erlangten Verbindungsstatus von jedem von dem Kommunikationsendgerät (50), der Informationsverarbeitungsvorrichtung (60) und der Ausgabevorrichtung (70);
Erzeugen der Ausführungsanforderung basierend auf dem bestimmten Übertragungsziel, wobei
wenn das bestimmte Übertragungsziel die Informationsverarbeitungsvorrichtung (60) ist, die Ausführungsanforderung eine erste Ausführungsanforderung einschließt, die die elektronischen Daten identifizierende Informationen und die Ausgabevorrichtung (70) identifizierende Informationen einschließt,
wenn das bestimmte Übertragungsziel die Ausgabevorrichtung (70) ist, die Ausführungsanforderung eine zweite Ausführungsanforderung einschließt, die die elektronischen Daten identifizierende Informationen und die Informationsverarbeitungsvorrichtung (60) identifizierende Informationen einschließt,
wenn das bestimmte Übertragungsziel die Informationsverarbeitungsvorrichtung (60) und die Ausgabevorrichtung (70) ist, die Ausführungsanforderung eine dritte Ausführungsanforderung zur Übertragung an die Informationsverarbeitungsvorrichtung (60) einschließt, wobei die dritte Ausführungsanforderung eine Erlangungsanforderung zum Erlangen der elektronischen Daten einschließt, und eine vierte Ausführungsanforderung zur Übertragung an die Ausgabevorrichtung (70) einschließt, wobei die vierte Ausführungsanforderung die elektronischen Daten und eine Ausgabeanforderung zum Ausgeben der elektronischen Daten einschließt, wobei
wenn die Informationsverarbeitungsvorrichtung (60) in einem anderen Netzwerk als dem Netzwerk vorgesehen ist, mit dem das Kommunikationsendgerät verbunden ist, die durch die Erzeugungseinheit (52) erzeugte dritte Ausführungsanforderung über eine Relaisvorrichtung gesendet wird und ferner Informationen zum Identifizieren der Informationsverarbeitungsvorrichtung (60) einschließt, und das Kommunikationsendgerät die elektronischen Daten von der Relaisvorrichtung herunterlädt, und
wenn die Ausgabevorrichtung (70) in einem anderen Netzwerk als das Netzwerk vorgesehen ist, mit dem das Kommunikationsendgerät verbunden ist, die vierte Ausführungsanforderung über die Relaisvorrichtung gesendet wird und ferner Informationen zum Identifizieren der Ausgabevorrichtung (70) einschließt; und
Senden von mindestens einer von der ersten, der zweiten, der dritten und der vierten Ausführungsanforderung an das bestimmte Übertragungsziel.

14. Trägermittel, das einen computerlesbaren Code trägt, der, wenn er durch Rechenmittel eines Kommunikationsendgeräts ausgeführt wird, das Kommunikationsendgerät veranlasst, das Verfahren nach Anspruch 13 auszuführen.

## Revendications

1. Terminal de communication (50) comprenant :
une unité de réception (43) configurée de manière à recevoir une entrée d'une instruction d'exécution qui donne instruction d'exécuter un processus de fourniture en sortie destiné à fournir en sortie des données électroniques stockées dans un appareil de traitement d'informations (60) en utilisant un appareil de sortie (70) ;
une unité d'obtention (51) configurée de manière à obtenir un état de connexion de chacun des éléments parmi le terminal de communication (50), l'appareil de traitement d'informations (60) et l'appareil de sortie (70), en réponse à la réception de l'entrée de l'instruction d'exécution, dans lequel l'étape d'obtention d'un état de connexion du terminal de communication (50) comprend les étapes ci-dessous consistant à :
déterminer si le terminal de communication (50) peut être connecté à un réseau en utilisant une connexion de réseau LAN, et si oui, transmettre un paquet d'interrogation au réseau connecté par la connexion de réseau LAN ; et
si une réponse au paquet d'interrogation est reçue en provenance de l'appareil de traitement d'informations (60) et de l'appareil de sortie (70) au cours d'une période de temps prédéterminée, déterminer que le terminal de communication, l'appareil de traitement d'informations et l'appareil de sortie sont connectés au même réseau ;
si aucune réponse au paquet d'interrogation n'est reçue en provenance de l'appareil de traitement d'informations (60) et/ou de l'appareil de sortie (70) au cours d'une période de temps prédéterminée, déterminer que l'appareil de traitement d'informations et/ou l'appareil de sortie, respectivement, sont connectés à un ou plusieurs réseaux différents du réseau auquel le terminal de communication est connecté ;
le terminal de communication comprenant en outre :
une unité de détermination (53) destinée à déterminer une destination de transmission d'une demande d'exécution devant être mise en oeuvre pour exécuter le processus de fourniture en sortie ordonné par l'instruction d'exécution, en fonction de l'état de connexion, de chacun des éléments parmi le terminal de communication (50), l'appareil de traitement d'informations (60) et l'appareil de sortie (70), qui est obtenu par l'unité d'obtention (51) ; et
une unité de génération (52) configurée de manière à générer la demande d'exécution sur la base de la destination de transmission déterminée par l'unité de détermination (53) ;
dans lequel
si la destination de transmission déterminée par l'unité de détermination (53) est l'appareil de traitement d'informations (60), la demande d'exécution inclut une première demande d'exécution incluant des informations qui identifient les données électroniques et des informations qui identifient l'appareil de sortie (70) ;
si la destination de transmission déterminée par l'unité de détermination (53) est l'appareil de sortie (70), la demande d'exécution inclut une deuxième demande d'exécution incluant des informations qui identifient les données électroniques, et des informations qui identifient l'appareil de traitement d'informations (60) ;
si la destination de transmission déterminée par l'unité de détermination (53) est l'appareil de traitement d'informations (60) et l'appareil de sortie (70), la demande d'exécution inclut une troisième demande d'exécution à transmettre à l'appareil de traitement d'informations (60), la troisième demande d'exécution incluant une demande d'obtention visant à obtenir les données électroniques, et une quatrième demande d'exécution à transmettre à l'appareil de sortie (70), la quatrième demande d'exécution incluant les données électroniques et une demande de sortie pour fournir en sortie les données électroniques, dans lequel
si l'appareil de traitement d'informations (60) est fourni sur un réseau différent du réseau auquel le terminal de communication est connecté, la troisième demande d'exécution générée par l'unité de génération (52) est envoyée par l'intermédiaire d'un appareil de relais et inclut en outre des informations pour identifier l'appareil de traitement d'informations (60), et le terminal de communication est configuré de manière à télécharger les données électroniques à partir de l'appareil de relais ; et
si l'appareil de sortie (70) est fourni sur un réseau différent du réseau auquel le terminal de communication est connecté, la quatrième demande d'exécution est envoyée par l'intermédiaire de l'appareil de relais et inclut en outre des informations pour identifier l'appareil de sortie (70) ; et
le terminal de communication comprenant en outre une unité de transmission (52) configurée de manière à transmettre au moins l'une parmi la première demande d'exécution, la deuxième demande d'exécution, la troisième demande d'exécution et la quatrième demande d'exécution, générées par l'unité de génération (52), à la destination de transmission déterminée par l'unité de détermination (53).

2. Terminal de communication (50) selon la revendication 1, dans lequel, si la destination de transmission déterminée par l'unité de détermination (53) est l'appareil de traitement d'informations (60), et si l'unité de détermination (53) détermine qu'il convient de transmettre la demande d'exécution à l'appareil de traitement d'informations (60) fourni sur un réseau différent, par l'intermédiaire d'un appareil de relais (30), la première demande d'exécution à transmettre à l'appareil de traitement d'informations (60), générée par l'unité de génération (52), inclut en outre des informations pour identifier l'appareil de traitement d'informations (60).

3. Terminal de communication (50) selon la revendication 1, dans lequel, si la destination de transmission déterminée par l'unité de détermination (53) est l'appareil de sortie (70), et si l'unité de détermination (53) détermine qu'il convient de transmettre la demande d'exécution à l'appareil de sortie (70) fourni sur un réseau différent par l'intermédiaire d'un appareil de relais (30), la deuxième demande d'exécution à transmettre à l'appareil de sortie (70), générée par l'unité de génération (52), inclut en outre des informations pour identifier l'appareil de sortie (70).

4. Terminal de communication (50) selon la revendication 1, dans lequel, si une communication directe est établie entre le terminal de communication (50), l'appareil de traitement d'informations (60) et l'appareil de sortie (70), l'unité de détermination (53) détermine l'appareil de traitement d'informations (60) comme étant la destination de transmission.

5. Terminal de communication (50) selon la revendication 1, dans lequel, si une communication directe est établie entre le terminal de communication (50) et l'appareil de traitement d'informations (60), si une communication directe n'est pas établie entre le terminal de communication (50) et l'appareil de sortie (70), et si une communication directe est établie entre l'appareil de traitement d'informations (60) et l'appareil de sortie (70), l'unité de détermination (53) détermine l'appareil de traitement d'informations (60) comme étant la destination de transmission.

6. Terminal de communication (50) selon la revendication 1, dans lequel, si une communication directe est établie entre le terminal de communication (50) et l'appareil de traitement d'informations (60), si une communication directe n'est pas établie entre l'appareil de traitement d'informations (60) et l'appareil de sortie (70), si une communication directe n'est pas établie entre le terminal de communication (50) et l'appareil de sortie (70), et si le terminal de communication (50) est connecté à l'appareil de sortie (70) indirectement, par l'intermédiaire de l'appareil de relais (30), l'unité de détermination (53) détermine l'appareil de traitement d'informations (60) et l'appareil de sortie (70) comme étant la destination de transmission, et détermine qu'il convient de transmettre la demande d'exécution à l'appareil de sortie (70) par l'intermédiaire de l'appareil de relais (30).

7. Terminal de communication (50) selon la revendication 1, dans lequel, si une communication directe est établie entre le terminal de communication (50) et l'appareil de traitement d'informations (60), si une communication directe n'est pas établie entre le terminal de communication (50) et l'appareil de traitement d'informations (60), d'une part, et l'appareil de sortie (70), d'autre part ; et si le terminal de communication (50) n'est pas en mesure de communiquer avec l'appareil de sortie (70) par l'intermédiaire d'un appareil de relais (30), l'unité de détermination (53) détermine l'appareil de traitement d'informations (60) comme étant la destination de transmission.

8. Terminal de communication (50) selon la revendication 1, dans lequel, si une communication directe n'est pas établie entre le terminal de communication (50) et l'appareil de traitement d'informations (60), si une communication directe est établie entre le terminal de communication (50) et l'appareil de sortie (70), et si une communication directe n'est pas établie entre l'appareil de traitement d'informations (60) et l'appareil de sortie (70), l'unité de détermination (53) détermine l'appareil de traitement d'informations (60) et l'appareil de sortie (70) comme étant la destination de transmission.

9. Terminal de communication (50) selon la revendication 2, dans lequel, si une communication directe n'est pas établie entre le terminal de communication (50) et l'appareil de traitement d'informations (60), si une communication directe est établie entre le terminal de communication (50) et l'appareil de sortie (70), et si l'appareil de traitement d'informations (60) est en mesure de transmettre la demande d'exécution à l'appareil de sortie (70) en établissant une connexion entre l'appareil de traitement d'informations (60) et l'appareil de sortie (70), l'unité de détermination (53) détermine l'appareil de traitement d'informations (60) comme étant la destination de transmission, et détermine qu'il convient de transmettre la demande d'exécution à l'appareil de traitement d'informations (60) par l'intermédiaire de l'appareil de relais (30).

10. Terminal de communication (50) selon la revendication 1, dans lequel, si une communication directe n'est pas établie entre le terminal de communication (50) et l'appareil de traitement d'informations (60), si une communication directe est établie entre le terminal de communication (50) et l'appareil de sortie (70), et si l'appareil de traitement d'informations (60) n'est pas en mesure d'établir une connexion avec l'appareil de sortie (70) pour transmettre la demande d'exécution à l'appareil de sortie (70), l'unité de détermination (53) détermine l'appareil de sortie (70) comme étant la destination de transmission.

11. Terminal de communication (50) selon la revendication 1, dans lequel l'unité de détermination (53) détermine une demande d'exécution pour le processus de fourniture en sortie, et une destination de transmission de la demande d'exécution, en fonction de l'état de connexion, obtenu par l'unité d'obtention (51), et d'un type du processus de fourniture en sortie.

12. Terminal de communication (50) selon la revendication 1, dans lequel l'unité de détermination (53) détermine une demande d'exécution pour le processus de fourniture en sortie, et une destination de transmission de la demande d'exécution, en fonction de l'état de connexion, obtenu par l'unité d'obtention (51), et d'un type de l'appareil de sortie (70).

13. Procédé de traitement d'informations au moyen d'un terminal de communication (50), le procédé comprenant les étapes ci-dessous consistant à :
recevoir une entrée d'une instruction d'exécution qui donne instruction d'exécuter un processus de fourniture en sortie destiné à fournir en sortie des données électroniques stockées dans un appareil de traitement d'informations (60) en utilisant un appareil de sortie (70) ;
obtenir un état de connexion de chacun des éléments parmi le terminal de communication (50), l'appareil de traitement d'informations (60) et l'appareil de sortie (70), en réponse à la réception de l'entrée de l'instruction d'exécution, dans lequel l'étape d'obtention d'un état de connexion du terminal de communication (50) comprend les étapes ci-dessous consistant à :
déterminer si le terminal de communication (50) peut être connecté à un réseau en utilisant une connexion de réseau LAN, et si oui, transmettre un paquet d'interrogation au réseau connecté par la connexion de réseau LAN ; et
si une réponse au paquet d'interrogation est reçue en provenance de l'appareil de traitement d'informations (60) et de l'appareil de sortie (70) au cours d'une période de temps prédéterminée, déterminer que le terminal de communication, l'appareil de traitement d'informations et l'appareil de sortie sont connectés au même réseau ;
si aucune réponse au paquet d'interrogation n'est reçue en provenance de l'appareil de traitement d'informations (60) et/ou de l'appareil de sortie (70) au cours d'une période de temps prédéterminée, déterminer que l'appareil de traitement d'informations et/ou l'appareil de sortie, respectivement, sont connectés à un ou plusieurs réseaux différents du réseau auquel le terminal de communication est connecté ;
déterminer une destination de transmission d'une demande d'exécution devant être mise en oeuvre pour exécuter le processus de fourniture en sortie ordonné par l'instruction d'exécution, en fonction de l'état de connexion obtenu de chacun des éléments parmi le terminal de communication (50), l'appareil de traitement d'informations (60) et l'appareil de sortie (70) ;
générer la demande d'exécution sur la base de la destination de transmission déterminée ;
dans lequel
si la destination de transmission déterminée est l'appareil de traitement d'informations (60), la demande d'exécution inclut une première demande d'exécution incluant des informations qui identifient les données électroniques et des informations qui identifient l'appareil de sortie (70) ;
si la destination de transmission déterminée est l'appareil de sortie (70), la demande d'exécution inclut une deuxième demande d'exécution incluant des informations qui identifient les données électroniques, et des informations qui identifient l'appareil de traitement d'informations (60) ;
si la destination de transmission déterminée est l'appareil de traitement d'informations (60) et l'appareil de sortie (70), la demande d'exécution inclut une troisième demande d'exécution à transmettre à l'appareil de traitement d'informations (60), la troisième demande d'exécution incluant une demande d'obtention visant à obtenir les données électroniques, et une quatrième demande d'exécution à transmettre à l'appareil de sortie (70), la quatrième demande d'exécution incluant les données électroniques et une demande de sortie pour fournir en sortie les données électroniques, dans lequel
si l'appareil de traitement d'informations (60) est fourni sur un réseau différent du réseau auquel le terminal de communication est connecté, la troisième demande d'exécution générée par l'unité de génération (52) est envoyée par l'intermédiaire d'un appareil de relais et inclut en outre des informations pour identifier l'appareil de traitement d'informations (60), et le terminal de communication télécharge les données électroniques à partir de l'appareil de relais ; et
si l'appareil de sortie (70) est fourni sur un réseau différent du réseau auquel le terminal de communication est connecté, la quatrième demande d'exécution est envoyée par l'intermédiaire de l'appareil de relais et inclut en outre des informations pour identifier l'appareil de sortie (70) ; et
transmettre au moins l'une parmi la première demande d'exécution, la deuxième demande d'exécution, la troisième demande d'exécution et la quatrième demande d'exécution, à la destination de transmission déterminée.

14. Moyen de support portant un code lisible par ordinateur qui, lorsqu'il est exécuté par des moyens informatiques d'un terminal de communication, amènent le terminal de communication à mettre en oeuvre le procédé selon la revendication 13.
